# EUROPEAN PATENT SPECIFICATION

(11) **EP 3 458 183 B1**
(45) Date of publication and mention of the grant of the patent: **24.08.2022**
(21) Application number: 17726488.4
(22) Date of filing: 19.05.2017
(51) Int. Cl.: B01D 67/00, B01D 69/10, B01D 71/02, B01D 69/14, B01D 61/02, B01D 69/12, B01D 71/56

(54) **SELECTIVELY PERMEABLE GRAPHENE OXIDE MEMBRANE**
SELEKTIV DURCHLÄSSIGE GRAPHENOXIDMEMBRAN
MEMBRANE D'OXYDE DE GRAPHÈNE SÉLECTIVEMENT PERMÉABLE

(30) Priority: 20.05.2016 US 201662339716 P; 20.05.2016 US 201662339721 P; 23.05.2016 US 201662340292 P; 23.05.2016 US 201662340298 P; 01.03.2017 US 201762465635 P
(43) Date of publication of application: 27.03.2019
(73) Proprietor: Nitto Denko Corporation, Ibaraki-shi, Osaka 567-8680 (JP)
(72) Inventor: ZHENG, Shijun, San Diego California 92129 (US); KITAHARA, Isamu, San Diego California 92130 (US); SIDDIQUI, Ozair, Murrieta California 92563 (US); YAMASHIRO, Yuji, Kusatsu Shiga 525-0042 (JP); LIN, Weiping, Carlsbad California 92009 (US); ERICSON, John, La Palma California 90623 (US); ROMERO, Rebecca, Escondido California 92025 (US); WANG, Peng, San Diego California 92128 (US); NOUMI, Shunsuke, Shiga Osaka 525-042 (JP); BARTELS, Craig Roger, San Diego California 92127 (US); HSIEH, Wanyun, San Diego California 92126 (US); HIROSE, Masahiko, Shiga Osaka 525-0042 (JP); KOBUKE, Makoto, Ibaraki-shi Osaka 567-8680 (JP)
(74) Representative: Potter Clarkson
(86) International application number: PCT/US2017/033654
(87) International publication number: WO 2017/201482

(56) References cited:
- EP-A1- 2 983 808
- EP-A2- 2 722 100
- WO-A1-2016/011124
- WO-A2-2018/160871
- US-A1- 2013 146 530
- US-A1- 2014 008 291
- US-B2- 8 925 736
- MENG HU ET AL: "Enabling Graphene Oxide Nanosheets as Water Separation Membranes", ENVIRONMENTAL SCIENCE & TECHNOLOGY, vol. 47, no. 8, 16 April 2013 (2013-04-16) , pages 3715-3723, XP055163639, ISSN: 0013-936X, DOI: 10.1021/es400571g
- WEI-SONG HUNG ET AL: "Cross-Linking with Diamine Monomers To Prepare Composite Graphene Oxide-Framework Membranes with Varying d-spacing", CHEMISTRY OF MATERIALS,, vol. 26, 14 April 2014 (2014-04-14), pages 2983-2990, XP002763259,

## Description

### CROSS REFERENCE TO RELATED APPLICATIONS

This application claims the benefit of U.S. Provisional Application Nos. 62/339,716 filed May, 20, 2016; 62/339,721 filed May 20, 2016; 62/340,292 filed May 23, 2016; 62/340,298 filed May 23, 2016, and 62/465,635 filed March 1, 2017.

### FIELD

The present embodiments are related to multi-layer polymeric membranes, including membranes comprising graphene materials for uses such as water treatment, desalination of saline water, or water removal.

### BACKGROUND

Due to the increase of human population and water consumption coupled with limited fresh water resources on earth, technologies such as sea water desalination and water treatment, such as water recycling to provide safe and fresh water have become more important to our society. Today the desalination process using reverse osmosis (RO) membrane is the leading technology for producing fresh water from saline water. Most of current commercial RO membranes adopt a thin-film composite (TFC) configuration consisting of a thin aromatic polyamide selective layer on top of a microporous substrate which is typically a polysulfone membrane on non-woven polyester. Although these RO membranes can provide excellent salt rejection rate and high water flux, thinner and more hydrophilic membranes are still desired to further improve energy efficiency of the RO process. Therefore, new and better membrane materials and synthetic methods are in high demand to achieve desired properties. WEI-SONG HUNG ET AL: "Cross-Linking with Diamine Monomers To Prepare Composite Graphene Oxide-Framework Membranes with Varying d-spacing", CHEMISTRY OF MATERIALS, vol. 26, 14 April 2014 (2014-04-14), MENG HU ET AL: "Enabling Graphene Oxide Nanosheets as Water Separation Membranes", ENVIRONMENTAL SCIENCE & TECHNOLOGY, vol. 47, no. 8, 16 April 2013 (2013-04-16), pages 3715-3723,WO2016/011124 A1, EP2983808 A1, US 2013/146530 A1 all disclose cross-linked GO membranes.

### SUMMARY

This disclosure relates to a Graphene Oxide (GO) based multilayered membranes suitable for high water flux applications. The GO membrane may have been crosslinked by one or more water soluble cross-linkers. Methods of making these GO membrane compositions efficiently and economically are also described. Water can be used as a solvent in preparing these GO membrane compositions, which makes the membrane preparation process more environmentally friendly and more cost effective.

The present invention provides
a water permeable membrane comprising:
a porous support; and
a composite, which is in fluid communication with the support, comprising a crosslinked graphene oxide (GO) composite layer;
wherein the GO composite layer is crosslinked by a crosslinker comprising a compound of Formula 2,: 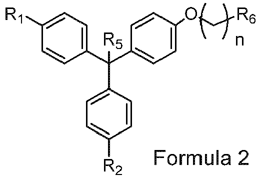 wherein R₁ and R₂ are independently NH₂ or OH;; R₅ is H, CH₃, or C₂H₅; R₆, is H, CO₂H or SO₃H; and n is 0, 1, 2, 3, 4, 5, 6, 7, 8, 9, or 10; and
wherein the porous support is pretreated with dopamine and
wherein the coating thickness of the composite on the substrate is 10nm to 50nm.

The present invention also provides a method of making the water permeable membrane of claim 1, comprising: (1) pretreating a substrate with dopamine; (2) resting a coating mixture of a single mixed aqueous solution of a graphene oxide and a cross-linker for 30 min to 12 hours to create a coating mixture, (3) applying the coating mixture to a substrate; (4) repeating step 3 as necessary to achieve the desired thickness or number of layers; and (5) curing the resulting coated substrate at 50 °C to 120 °C for 15 minutes to 2 hours..

### BRIEF DESCRIPTION OF THE DRAWINGS

FIG. 1 is a depiction of a possible embodiment of a membrane without a salt rejection layer, intermediate layer, or a protective coating.
FIG. 2 is a depiction a possible embodiment of a membrane with a protective coating but without a salt rejection layer or an intermediate layer.
FIG. 3 is a depiction of a possible embodiment of a membrane with an intermediate layer but without a salt rejection layer or a protective coating.
FIG. 4 is a depiction of a possible embodiment of a membrane with an intermediate layer and a protective coating but without a salt rejection layer.
FIG. 5 is a depiction of a possible embodiment of a membrane with a salt rejection layer but without an intermediate layer or a protective coating.
FIG. 6 is a depiction of a possible embodiment of a membrane with a salt rejection layer and a protective coating but without an intermediate layer.
FIG. 7 is a depiction of a possible embodiment of a membrane with a salt rejection layer and an intermediate layer but without a protective coating.
FIG. 8 is a depiction of a possible embodiment of a membrane with a salt rejection layer, an intermediate layer, and a protective coating.
FIG. 9 is a depiction of a possible embodiment for the method of making a membrane.
FIG. 10 is a diagram depicting the experimental setup for the mechanical strength testing and water permeability and/or salt rejection testing.
FIG. 11 is a diagram depicting the experimental setup for the water vapor permeability and gas leakage testing.

### DETAILED DESCRIPTION

I.

| Name of unit | Symbol | Conversion Factor | SI or metric unit |
|---|---|---|---|
| Gal.ft².day⁻¹ | GFD | 1.70 | Litre.m⁻².h⁻¹ (LMH) |

### General

A selectively permeable membrane includes a membrane that is relatively permeable for one material and relatively impermeable for another material. For example, a membrane may be relatively permeable to water or water vapor and relatively impermeable ionic compounds or heavy metals. In some embodiments, the selectively permeable membrane can be permeable to water while being relatively impermeable to salts. The selectively permeable membrane comprises multiple layers, wherein at least one layer contains graphene oxide material.

Unless otherwise indicated, when a compound or a chemical structure, for example graphene oxide, is referred to as being "optionally substituted," it includes a compound or a chemical structure that either has no substituents (i.e., unsubstituted), or has one or more substituents (i.e., substituted). The term "substituent" has the broadest meaning known in the art, and includes a moiety that replaces one or more hydrogen atoms attached to a parent compound or structure. In some embodiments, a substituent may be any type of group that may be present on a structure of an organic compound, which may have a molecular weight (e.g., the sum of the atomic masses of the atoms of the substituent) of 15-50 g/mol, 15-100 g/mol, 15-150 g/mol, 15-200 g/mol, 15-300 g/mol, or 15-500 g/mol. In some embodiments, a substituent comprises, or consists of: 0-30, 0-20, 0-10, or 0-5 carbon atoms; and 0-30, 0-20, 0-10, or 0-5 heteroatoms, wherein each heteroatom may independently be: N, O, S, Si, F, Cl, Br, or I; provided that the substituent includes one C, N, O, S, Si, F, Cl, Br, or I atom. Examples of substituents include, but are not limited to, alkyl, alkenyl, alkynyl, heteroalkyl, heteroalkenyl, heteroalkynyl, aryl, heteroaryl, hydroxy, alkoxy, aryloxy, acyl, acyloxy, alkylcarboxylate, thiol, alkylthio, cyano, halo, thiocarbonyl, O-carbamyl, N-carbamyl, O-thiocarbamyl, N-thiocarbamyl, C-amido, N-amido, S-sulfonamido, N-sulfonamido, isocyanato, thiocyanato, isothiocyanato, nitro, silyl, sulfenyl, sulfinyl, sulfonyl, haloalkyl, haloalkoxyl, trihalomethanesulfonyl, trihalomethanesulfonamido, amino, etc.

For convenience, the term "molecular weight" is used with respect to a moiety or part of a molecule to indicate the sum of the atomic masses of the atoms in the moiety or part of a molecule, even though it may not be a complete molecule.

As used herein, the term "alkyl" has the broadest meaning generally understood in the art and may include a moiety composed of carbon and hydrogen containing no double or triple bonds. Alkyl may be linear alkyl, branched alkyl, cycloalkyl, or a combination thereof and in some embodiments, may contain from one to thirty-five carbon atoms. Fox example, C₁₋₆ alkyl may include C₁₋₆ linear alkyl, such as methyl (-CH₃), methylene (-CH₂-), ethyl (-CH₂CH₃), ethylene (-C₂H₄-), propyl (-CH₂CH₂CH₃), propylene (-CH₂CH₂CH₂-), n-butyl (-CH₂CH₂CH₂CH₃), n-pentyl (-CH₂CH₂CH₂CH₂CH₃), n-hexyl (-CH₂CH₂CH₂CH₂CH₂CH₃); C₃₋₆ branched alkyl, such as C₃H₇ (e.g. iso-propyl), C₄H₉ (e.g. branched butyl isomers), C₅H₁₁ (e.g. branched pentyl isomers), C₆H₁₃ (e.g. branched hexyl isomers); C₃₋₆ cycloalkyl, such as C₃H₅ (e.g. cyclopropyl), C₄H₇ (e.g. cyclobutyl isomers such as cyclobutyl, methylcyclopropyl, etc.), C₅H₉ (e.g. cyclopentyl isomers such as cyclopentyl, methylcyclobutyl, dimethylcyclopropyl, etc.), C₆H₁₁ (e.g. cyclohexyl isomers); and the like.

As used herein, the term "fluid" includes any substance that continually deforms, or flows, under an applied shear stress. Such non-limiting examples of fluids include Newtonian and/or non-Newtonian fluids. In some embodiments, examples of Newtonian can be gases, liquids, and/or plasmas. In some embodiments, non-Newtonian fluids can be plastic solids (e.g., corn starch aqueous solution, toothpaste).

As used herein, the term "fluid communication" means that a fluid can pass through a first component and travel to and through a second component or more components regardless of whether they are in physical communication or the order of arrangement.

### II. Membrane

The present disclosure relates to water separation membranes made of hydrophilic composite material with low organic compound permeability and high mechanical and chemical stability. This type of membranes may be useful to support a polyamide salt rejection layer as a RO membrane. This type of membrane material may be suitable for solute removal from an unprocessed fluid, such as desalination from saline water, purifying drinking water, or waste water treatment. Some selectively permeable membranes described herein are GO-based membranes having a high water flux, which may improve the energy efficiency of RO membranes and improve water recovery/separation efficiency. In some embodiments, the GO-based membrane can comprise one or more filtering layers, with at least one layer comprising a composite of a crosslinked graphene oxide (GO). It is believed that a crosslinked GO layer, having graphene oxide's inherent hydrophilicity and selective permeability, can provide a GO-based membrane with broad applications where high water permeability and high selectivity of permeability is desirable. In some embodiments, the GO-based membrane can further comprise a filtering layer of crosslinked silica nanoparticles. It is believed that the additional layer of crosslinked silica nanoparticles can increase material strength. In addition, these selectively permeable membranes can be prepared using water as a solvent, which makes the manufacturing process much more environmentally friendly and cost effective.

The selectively permeable membrane comprises a porous substrate or support, such as a porous support comprising a polymer or hollow fibers. One or more layers are disposed on the porous support. In some embodiments where there is a plurality of layers, the layers can comprise a crosslinked graphene oxide (GO) layer and a crosslinked silica nanoparticle layer. The layer(s) can be in fluid communication with the support. The membrane can further comprise a salt rejection layer. In addition, the membrane can also comprise a protective layer. In some embodiments, the protective layer can comprise a hydrophilic polymer. In some embodiments, the fluid passing through the membrane travels through all the components regardless of whether they are in physical communication or their order of arrangement.

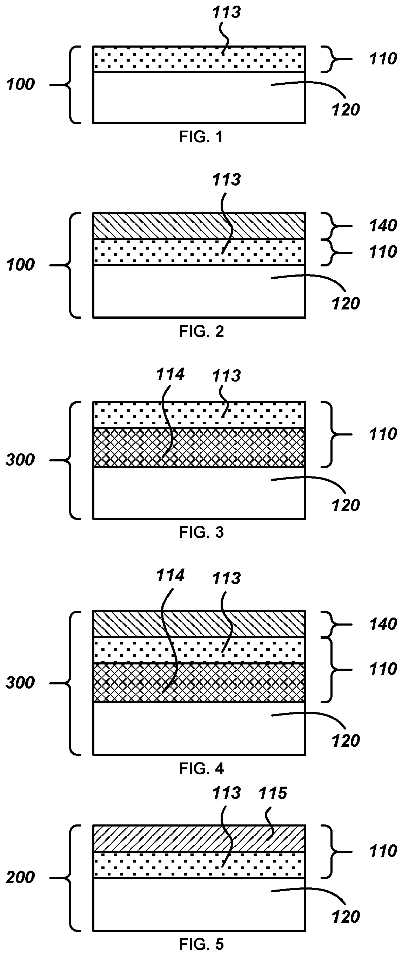

Some non-limiting examples of a membrane **100** without a salt rejection layer or a silica nanoparticle layer may be configured as shown in FIGS. 1 and 2. The membrane **100** comprises at least a support **120** and one or more filtering layers **110**. The filtering layers comprise a crosslinked GO layer **113**. In some embodiments, as shown in FIG. 2, the membrane may further comprise protective coating **140**. In some embodiments, as shown in FIG. 1, the membrane does not have a protective coating. Some non-limiting examples of membranes **300** are similar to membrane **100**, but with the exception of having a plurality of filtering layers **110**, comprising a crosslinked GO layer **113** and a crosslinked silica nanoparticle layer **114** as shown in FIGS. 3 and 4 with or without a protective coating. The filtering layers may comprise a plurality of crosslinked GO layers . In some embodiments, the membrane can allow the passage of water and/or water vapor, but resists the passage of solute. The solute restrained can comprise ionic compounds such as salts or heavy metals.

In some embodiments, the membrane can be used to remove water from a controlled volume. A membrane may be disposed between a first fluid reservoir and a second fluid reservoir such that the reservoirs are in fluid communication through the membrane. The first reservoir may contain a feed fluid upstream and/or at the membrane.

In some embodiments, the membrane selectively allows liquid water or water vapor to pass through while keeping solute, or other liquid material from passing through. The fluid upstream of the membrane can comprise a solution of water and solute, while the fluid downstream of the membrane may contain purified water or processed fluid. In some embodiments, the membrane may provide a durable desalination system that can be selectively permeable to water, and less permeable to salts. In some embodiments, the membrane may provide a durable reverse osmosis system that can effectively filter saline water, polluted water or feed fluids.

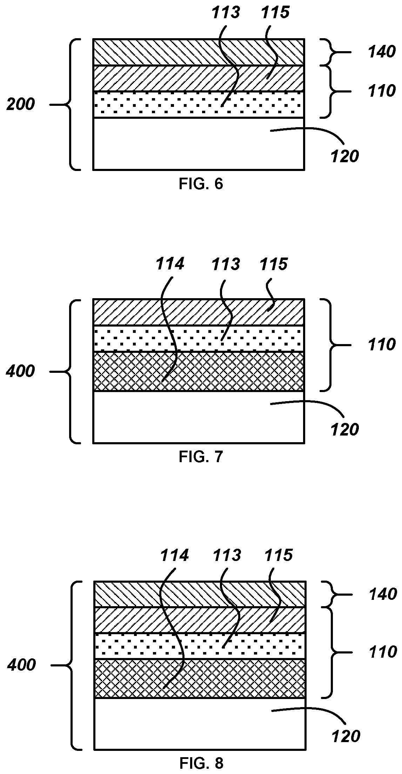

Some non-limiting examples of a membrane **200** and **400** can additionally comprise a salt rejection layer **115** that may be configured as shown in FIGS. 5 and 6. In some embodiments, the membrane **200** can comprise at least a support **120** and a plurality of filtering layers **110**. The plurality of layers can comprise a crosslinked GO layer **113** and a salt rejection layer **115**. The salt rejection layer **115** may be disposed on top of the crosslinked GO layer **113**. As shown in FIG. 6, the membrane may further comprise a protective coating, **140**, wherein the protective coating can protect the components of the membrane from harsh environments. In some embodiments, as shown in FIG. 5, the membrane does not have a protective coating. In some non-limiting examples of membranes, the plurality of filtering layers can further comprise a crosslinked silica nanoparticle layer **114** as shown in FIGS. 7 and 8, with or without a protective coating. In some embodiments, the plurality of layers may comprise a plurality of crosslinked GO layersor a plurality of silica nanoparticles layers.

In some embodiments, the membrane exhibits a normalized volumetric water flow rate of about 10-1000 gal·ft⁻²·day⁻¹·bar⁻¹; about 20-750 gal·ft⁻²·day⁻¹·bar⁻¹; about 100-500 gal·ft⁻²·day⁻¹·bar⁻¹; about 500-1000 gal·ft⁻²·day⁻¹·bar⁻¹, about 200-400 gal·ft⁻²·day⁻¹·bar⁻¹, about 10-100 gal·ft⁻²·day⁻¹·bar⁻¹, about 100-200 gal·ft⁻²·day⁻¹·bar⁻¹, at least about 10 gal·ft⁻²·day⁻¹·bar⁻¹, about 20 gal·ft⁻²·day⁻¹·bar⁻¹, about 100 gal·ft⁻²·day⁻¹·bar⁻¹, about 200 gal·ft⁻²·day⁻¹·bar⁻¹, or a normalized volumetric water flow rate in a range bounded by any combination of these values.

In some embodiments, a membrane may be a selectively permeable. In some embodiments, the membrane may be an osmosis membrane. In some embodiments, the membrane may be a water separation membrane. In some embodiments, the membrane may be a reverse osmosis (RO) membrane. In some embodiments, the selectively permeable membrane may comprise multiple layers, wherein at least one layer contains a GO-PVA-based composite.

### III. Crosslinked GO Layer

The membranes described herein comprise a crosslinked GO layer. Some crosslinked GO-layers can comprise a GO-based composite. The GO-based composite comprises a graphene oxide material and a crosslinker. The GO-based composite can also comprise one or more additives. In some embodiments, the GO-based composite is crosslinked wherein the constituents of the composite (e.g., graphene oxide compound, the crosslinker, and/or additives) are chemically bound to any combination of each other to result in a material matrix.

In some embodiments, the GO-based composite can have an interlayer distance or d-spacing of about 0.5-3 nm, about 0.6-2 nm, about 0.7-1.8 nm, about 0.8-1.7 nm, about 0.9-1.7 nm, about 1-2 nm, about 1.5-1.7 nm, about 1.61 nm, about 1.67 nm, about 1.55 nm or any distance in a range bounded by any of these values. The d-spacing can be determined by x-ray powder diffraction (XRD).

### Graphene Oxide

In general, graphene-based materials have many attractive properties, such as a 2-dimensional sheet-like structure with extraordinary high mechanical strength and nanometer scale thickness. The graphene oxide (GO), an exfoliated oxidation of graphite, can be mass produced at low cost. With its high degree of oxidation, graphene oxide has high water permeability and exhibits versatility to be functionalized to have a variety of functional groups, such as amines or alcohols in membrane structures. Unlike traditional membranes, where the water is transported only through the pores of the material, in graphene oxide membranes the transportation of water can be done also between the interlayer spaces. GO's capillary effect can result in long water slip lengths that offer fast water transportation rate. Additionally, the membrane's selectivity and water flux can be controlled by adjusting the interlayer distance of graphene sheets, or by the utilization of various crosslinkers, or a combination thereof.

In the membranes disclosed herein, a GO material may be optionally substituted. The optionally substituted graphene oxide may contain a graphene which has been chemically modified, or functionalized. A modified graphene may be any graphene material that has been chemically modified, or functionalized.

Functionalized graphene includes one or more functional groups not present in graphene oxide, such as functional groups that are not OH, COOH or epoxide group directly attached to a C-atom of the graphene base. Examples of functional groups that may be present in functionalized graphene include halogen, alkene, alkyne, cyano, ester, amide, or amine.

In some embodiments, at least about 99%, at least about 95%, at least about 90%, at least about 80%, at least about 70%, at least about 60%, at least about 50%, at least about 40%, at least about 30%, at least about 20%, at least about 10%, or at least about 5% of the graphene molecules may be oxidized or functionalized. In some embodiments, the graphene material is graphene oxide, which may provide selective permeability for gases, fluids, and/or vapors. In some embodiments, graphene oxide can also include reduced graphene oxide. In some embodiments, graphene oxide compound can be graphene oxide, reduced-graphene oxide, functionalized graphene oxide, or functionalized and reduced-graphene oxide.

It is believed that there may be a large number (~30%) of epoxy groups on GO, which may be readily reactive with amino groups at mild conditions, or hydroxyl groups at elevated temperatures. It is also believed that GO sheets have an extraordinary high aspect ratio which provides a large available gas/water diffusion surface as compared to other materials, and it has the ability to decrease the effective pore diameter of any substrate supporting material to minimize contaminant infusion while retaining flux rates. It is also believed that the epoxy or hydroxyl groups increases the hydrophilicity of the materials, and thus contributes to the increase in water vapor permeability and selectivity of the membrane.

In some embodiments, the optionally substituted graphene oxide may be in the form of sheets, planes or flakes. In some embodiments, the graphene material may have a surface area of about 100-5000 m²/g, about 150-4000 m²/g, about 200-1000 m²/g, about 500-1000 m²/g, about 1000-2500 m²/g, about 2000-3000 m²/g, about 100-500 m²/g, about 400-500 m²/g, or any surface area in a range bounded by any of these values.

In some embodiments, the graphene oxide may be platelets having 1, 2, or 3 dimensions with size of each dimension independently in the nanometer to micron range. In some embodiments, the graphene may have a platelet size in any one of the dimensions, or may have a square root of the area of the largest surface of the platelet, of about 0.05-100 µm, about 0.05-50 µm, about 0.1-50 µm, about 0.5-10 µm, about 1-5 µm, about 0.1-2 µm, about 1-3 µm, about 2-4 µm, about 3-5 µm, about 4-6 µm, about 5-7 µm, about 6-8 µm, about 7-10 µm, about 10-15 µm, about 15-20 µm, about 50-100 µm, about 60-80 µm, about 50-60 µm, about 25-50 µm, about 20-30 µm, about 30-50 µm, or any platelet size in a range bounded by any of these values.

In some embodiments, the GO material can comprise at least 70%, at least 75%, at least 80%, at least 85%, at least 90%, at least 95%, at least 97%, or at least 99% of graphene material having a molecular weight of about 5,000 Daltons to about 200,000 Daltons.

### Crosslinker

The crosslinker is a triphenylmethane represented by Formula 2: 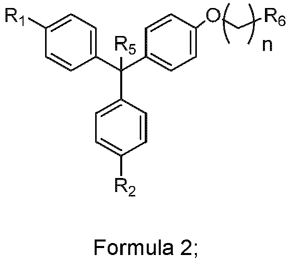 wherein R₁ and R₂ are independently NH₂ or OH; R₅ is H, CH₃, or C₂H₅; R₆ is H, -CO₂H, - CO₂Li, -CO₂Na, -CO₂K, -SO₃H, -SO₃Li, -SO₃Na, or -SO₃K; and n is 0, 1, 2, 3, 4, 5, 6, 7, 8, 9, or 10.

In some embodiments, at least two of R₁, R₂, R₅ and R₆ can be nucleophilic groups. In some embodiments, these nucleophilic groups, such as amino groups can react with the epoxides in the GO to form covalent bonds generating crosslinked GO composite. In some embodiments, R₁ and R₂ can be independently NH₂. In some embodiments, R₁ and R₂ can be independently OH. In some embodiments, R₁ and R₂ are both OH. In some embodiments, R₅ can be H, CH₃, or C₂H₅. In some embodiments, R₅ is CH₃. In some embodiments, R₆ can be independently H, or an organic acid group or a salt thereof, such as -CO₂H, -CO₂Na, -CO₂Li, -CO₂K, -SO₃H, -SO₃Na, -SO₃Li, or -SO₃K. In some embodiments, R₆ is SO₃Na. In some embodiments, n is 4.

In some embodiments, the optionally substituted triphenylmethane can comprise:

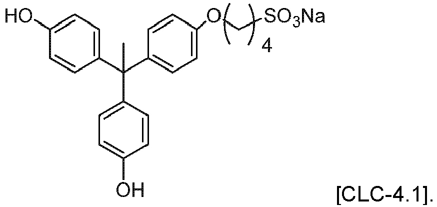

Of the following crosslinkers; only CLC 4.1 , is within the scope of the invention. 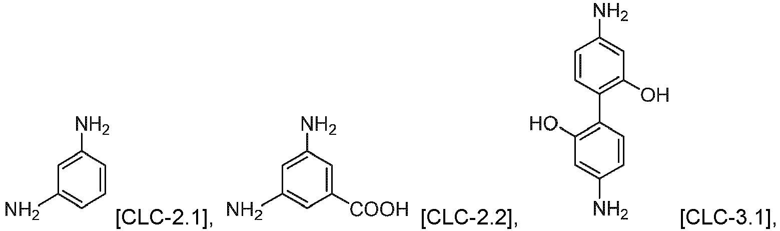 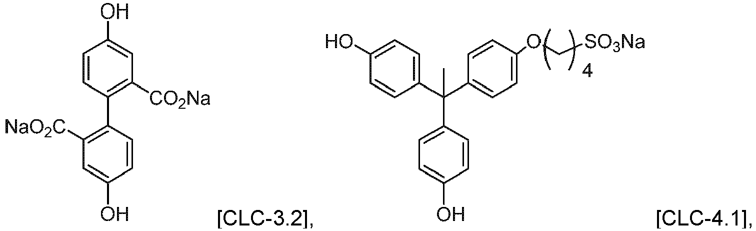 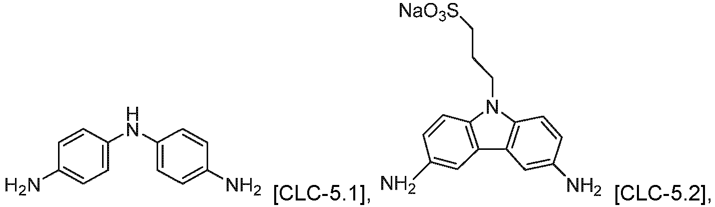 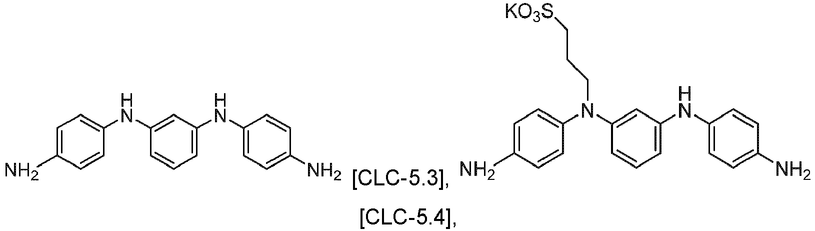 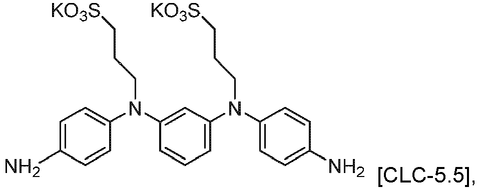 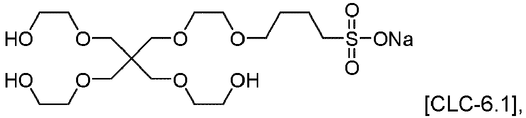 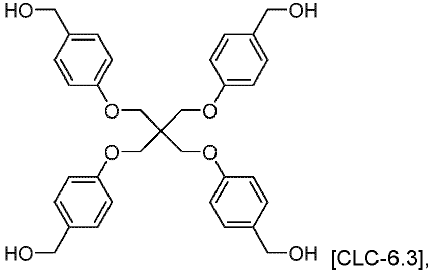 or

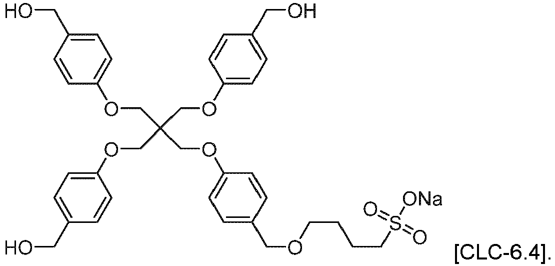

It is believed that when the cross-linker in the crosslinked GO composite membrane comprises an organic salt, such as sodium salt, potassium salt, or lithium salt, the hydrophilicity of the resulting GO membrane could be increased, thereby increasing the total water flux.

It is believed that crosslinking the graphene oxide material can also enhance the GO-based composite's mechanical strength and water permeable properties by creating strong chemical bonding and wide channels between graphene platelets to allow water to pass through the platelets easily. In some embodiments, the graphene material may comprise crosslinked graphene material at the graphene bases having at least about 1%, about 5%, about 10%, about 20%, about 30%, about 40% about 50%, about 60%, about 70%, about 80%, about 90%, about 95%, or all of the graphene material crosslinked to at least one other platelet within the GO-based composite. In some embodiments, the majority of the graphene material may be crosslinked. The amount of crosslinking may be estimated based on the weight of the cross-linker as compared to the total amount of graphene material.

In some embodiments, the weight ratio of crosslinker to GO (weight ratio = weight of crosslinker ÷ weight of graphene oxide) can be about 0.25-15, about 0.2-13, about 0.3-12, about 0.5-10, about 3-9, about 5-8, about 6-8, about 6-7, or about 6.25 or any ratio in a range bounded by any of these values.

In some embodiments, the mass percentage of the graphene base relative to the total composition of the GO-based composite can be about 5-40 wt%, about 5-10 wt%, about 10-15 wt%, about 15-20 wt%, about 20-30 wt%, about 30-40 wt%, about 4-80 wt%, about 4-75 wt%, about 5-70 wt%, about 7-65 wt%, about 7-60 wt%, about 7.5-55 wt%, about 8-50 wt%, about 8.5-50 wt%, about 15-50 wt%, or any mass percentage in a range bounded by any of these values.

In some embodiments, the crosslinked GO contains about 66-70 atom%, about 67-69 atom%, about 68-69 atom%, about 20-90 atom%, about 30-80 atom%, about 40-75 atom%, about 60-72 atom%, about 60-70 atom%, about 65-70 atom% carbon, or any percentage of carbon in a range bounded by any of these values based upon the total number of atoms in the crosslinked GO. The percentage of crosslinking can be determined by X-ray photoelectron spectroscopy (XPS).

In some embodiments, an optionally substituted graphene oxide crosslinked with cross-linker, can be at least about 5 atom%, about 7 atom%, about 10 atom%, about 12 atom%, about 14 atom%, about 15 atom%, about 16 atom%, about 17 atom%, about 18 atom%, about 19 atom%, or about 20 atom%, about 30-35 atom%, about 25-34 atom%, about 26-31 atom%, about 29-31 atom%, about 30 atom%, about 35 atom%, about 40 atom%, or about 50 atom% oxygen, or any percentage of oxygen in a range bounded by any of these values. The percentage of crosslinking can be determined by XPS.

In some embodiments, an optionally substituted graphene oxide crosslinked with cross-linker, can have a carbon to oxygen atom ratio (carbon atoms/oxygen atoms) of about 1-5.5, about 1.5-2.5, about 2-5, about 3-4, about 3-3.5, about 3.2-3.3, or any ratio in a range bounded by any of these values.

In some embodiments, the crosslinked GO contains about 0.1-2 atom%, about 0.5-2 atom%, about 0.5-1.5 atom%, or about 0.8-1.2 atom% of nitrogen, about 1 atom%, about 1.1 atom%, less than about 20 atom%, less than about 15 atom%, less than about 13 atom%, less than about 12 atom%, less than about 11 atom% nitrogen, or in any percentage of nitrogen in a range bounded by any of these values based upon the total number of atoms in the crosslinked GO. The percentage of crosslinking can be determined by XPS.

In some embodiments, the crosslinked GO contains about 0.1-1.0 atom%, about 0.1-0.5 atom%, about 0.5-1.0 atom%, about 0.2 atom%, about 0.3 atom%, or about 0.8 atom% sulfur, based upon the total number of atoms in the crosslinked GO. The percentage of crosslinking can be determined by XPS.

In some embodiments, an optionally substituted graphene oxide crosslinked with a crosslinker, can have an interlayer distance, or d-spacing that can be between about 0.5-3 nm, about 0.6-2 nm, about 0.7-1.7 nm, about 0.8-1.5 nm, about 0.9-1.4 nm, or any distance in a range bounded by any of these values. The d-spacing can be determined by x-ray powder diffraction (XRD).

### IV. Crosslinked Silica Nanoparticle Layer.

For some membranes, wherein there is a plurality of filtering layers, at least one layer can be a crosslinked silica nanoparticle layer. In some embodiments, the crosslinked silica nanoparticle layer comprises a silica nanoparticle and a polyvinyl alcohol composite. In some embodiments, the polyvinyl alcohol and the silica nanoparticles are chemically and/or covalently bound to form a material matrix.

In some embodiments, the molecular weight of the PVA in the silica nanoparticles layer may be about 100-1,000,000 Daltons (Da), about 10,000-500,000 Da, about 10,000-50,000 Da, about 50,000-100,000 Da, about 70,000-120,000 Da, about 80,000-130,000 Da, about 90,000-140,000 Da, about 90,000-100,000 Da, about 95,000-100,000 Da, about 98,000 Da, or any molecular weight in a range bounded by any of these values.

In some embodiments, an average size of the silica nanoparticles in the silica nanoparticles layer may be about 5-1,000 nm, about 6-500 nm, about 7-100 nm, about 7-20 nm, about 500-1000 nm, about 100-500 nm, about 100-200 nm, about 5-10 nm, about 10-20 nm, about 20-50 nm, about 50-100 nm, or any size in a range bounded by any of these values. The average size for a set of nanoparticles can be determined by taking the average volume and then determining the diameter of a sphere with the same volume. In some embodiments, the weight percentage of silica nanoparticles to PVA may be about 0.1% to 90%.

The crosslinked silica nanoparticles layer can further comprise an additive mixture. In some embodiments, the additive mixture can comprise a borate salt, a chloride salt, an optionally substituted terephthalic acid, or any combination thereof.

In some embodiments, the additive mixture can comprise a borate salt. In some embodiments, the borate salt comprises a tetraborate salt, such as K₂B₄O₇, Li₂B₄O₇, and Na₂B₄O₇. In some embodiments, the borate salt can comprise K₂B₄O₇. In some embodiments, the mass percentage of borate salt to the silicon nanoparticle and PVA composite may be about 0.0-20 wt%, about 0.5-15 wt%, about 1.0-10 wt%, about 1-5 wt%, about 5-10 wt%, about 10-15 wt%, or about 15-20 wt%, or any weight percentage in a range bounded by any of these values. In some embodiments, any combination of polyvinyl alcohol, silica nanoparticles, and borate salt can be covalently bonded to form a material matrix.

Some additive mixtures can comprise a chloride salt, such as lithium chloride or calcium chloride. In some embodiments, chloride salt can comprise calcium chloride. In some embodiments, the mass percentage of chloride salt to the silicon nanoparticle and PVA composite may be about 0-1.5 wt%, about 0-1.0 wt%, about 1-1.5 wt%, or about 0.5-1 wt%, or any weight percentage in a range bounded by any of these values.

The additive mixture can comprise an optionally substituted terephthalic acid. In some embodiments, the optionally substituted terephthalic acid can comprise 2,5-dihydroxyterephthalic acid (DHTA). In some embodiments, the mass percentage of the optionally substituted terephthalic acid to the silicon nanoparticle and PVA composite can be about 0-5 wt%, about 0-4 wt%, about 0-3 wt%, about 0-1 wt%, about 1-2 wt%, about 2-3 wt%, about 3-4 wt%, about 4-5 wt%, about 1-1.5 wt%, about 1.5-2 wt%, or any weight percentage in a range bounded by any of these values.

### V. Porous Support

A porous support may be any suitable material and in any suitable form upon which a layer, such as a layer of a GO-based composite, may be deposited or disposed. In some embodiments, the porous support can comprise hollow fibers or porous material. In some embodiments, the porous support may comprise a porous material, such as a polymer or a hollow fiber. Some porous supports can comprise a non-woven fabric. In some embodiments, the polymer may be polyamide (Nylon), polyimide (PI), polyvinylidene fluoride (PVDF), polyethylene (PE), polyethylene terephthalate (PET), polysulfone (PSF), polyether sulfone (PES), and/or any mixtures thereof. In some embodiments, the polymer can comprise PET. In some embodiments, the polymer can comprise a polyamide.

### VI. Salt Rejection Layer

Some membranes further comprise a salt rejection layer, e.g. disposed on the GO-based composite. The salt rejection layer can give the membrane low salt permeability. A salt rejection layer may comprise any material that is suitable for preventing the passage of ionic compounds, such as salts. In some embodiments, the salt rejected can comprise KCI, MgCl₂, CaCl₂, NaCl, K₂SO₄, Mg₂SO₄, CaSO₂, or Na₂SO₄. In some embodiments, the salt rejected can comprise NaCl. Some salt rejection layers comprise a polymer, such as a polyamide or a mixture of polyamides. In some embodiments, the polyamide can be a polyamide made from an amine (e.g. meta-phenylenediamine, para-phenylenediamine, ortho-phenylenediamine, piperazine, polyethylenimine, polyvinylamine, or the like) and an acyl chloride (e.g. trimesoyl chloride, isophthaloyl chloride, or the like). In some embodiments, the amine can be meta-phenylenediamine. In some embodiments, the acyl chloride can be trimesoyl chloride. In some embodiments, the polyamide can be made from a meta-phenylenediamine and a trimesoyl chloride (e.g. by a polymerization reaction between meta-phenylenediamine and trimesoyl chloride in the presence of a base and an organic solvent).

In some embodiments, the membrane may reject at least about 10%, at least about 30%, at least about 50%, at least about 70%, at least about 80%, at least about 90%, or at least about 97% of sodium chloride, e.g. when exposed to a 1500 ppm NaCl solution under a pressure of 225 psi and a water flux of 5 gallons per square foot per day (GFD).

### VII. Protective Coating

Some membranes may further comprise a protective coating. For example, the protective coating can be disposed on top of the membrane to protect it from the environment. The protective coating may have any composition suitable for protecting a membrane from the environment, Many polymers are suitable for use in a protective coating such as a hydrophilic polymer, e.g. polyvinyl alcohol (PVA), polyvinyl pyrrolidone (PVP), polyethylene glycol (PEG), polyethylene oxide (PEO), polyoxyethylene (POE), polyacrylic acid (PAA), polymethacrylic acid (PMMA) and polyacrylamide (PAM), polyethylenimine (PEI), poly(2-oxazoline), polyethersulfone (PES), methyl cellulose (MC), chitosan, poly (allylamine hydrochloride) (PAH), or poly (sodium 4-styrene sulfonate) (PSS), or any combinations thereof. In some embodiments, the protective coating can comprise PVA.

### VIII. Methods of Fabricating Membranes

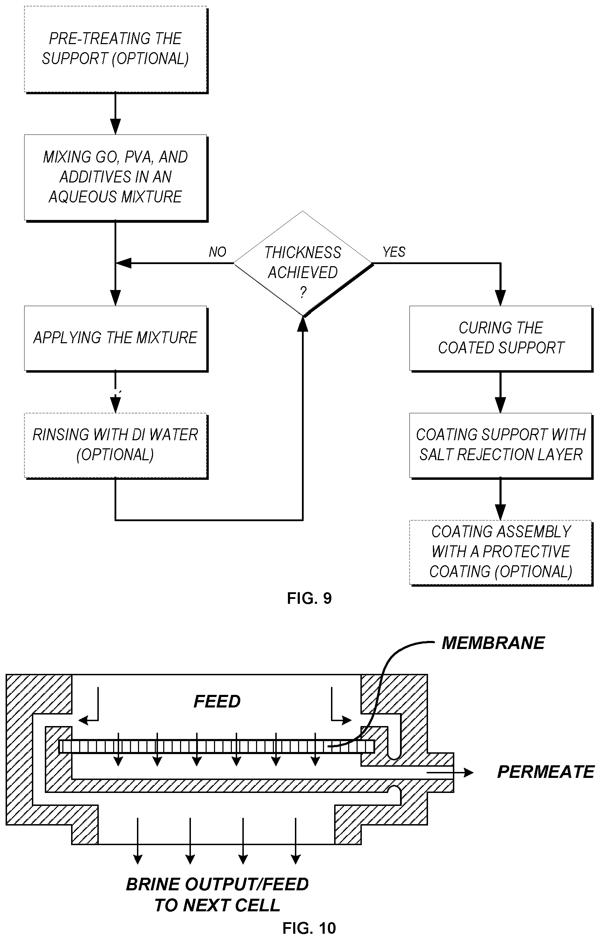

Some embodiments include methods for making the aforementioned membranes. Some methods include coating the porous support with a crosslinked GO layer. Some methods comprise additional steps of coating a porous support with a crosslinked silica nanoparticle layer. Some methods comprise coating the support with a silica nanoparticles layer before coating the support with a crosslinked GO layer. The method comprises pretreating the porous support. In some embodiments, the method can further comprise applying a salt rejection layer. Some methods also include applying a salt rejection layer on the coated membrane, followed by additional curing of resulting assembly. In some methods, a protective layer can also be placed on the assembly. An example of a possible embodiment of making the aforementioned membranes is shown in FIG. 9.

### Pre-treatment

The porous support is pre-treated to aid in the adhesion of the composite layer to the porous support. In some embodiments, the pretreatment can be applied to the porous support and then dried. For pretreatments, dopamine or polyvinyl alcohol can be used. Of these, only treatment with dopamine falls under the scope of the claims. For some pretreatments, the aqueous solution can comprise about 0.01-0.1 wt%, about 0.01 wt%, about 0.02 wt%, about 0.05 wt%, or about 0.1 wt% PVA. In some embodiments, the pretreated support can be dried at about 25-90 °C, about 25 °C, about 50 °C, about 65 °C, about 75 °C, or about 90 °C, for about 2 minutes to about 1 hour, about 2 minutes, about 5 minutes, about10 minutes, about 30 minutes, about 1 hour, or until the support is dry.

### Crosslinked Silica Nanoparticle Coating

Coating the porous support with a crosslinked silica nanoparticle layer comprises: (a) mixing silica nanoparticles and polyvinyl alcohol to obtain an aqueous coating mixture, (b) applying the coating mixture to the porous support to achieve a coated substrate; (c) repeating step b as necessary to achieve the desired thickness; and (d) curing the coated support.

Mixing silica nanoparticles and polyvinyl alcohol to obtain an aqueous coating mixture can be accomplished by dissolving appropriate amounts of silica nanoparticles and polyvinyl alcohol in water. Some methods comprise mixing at least two separate aqueous mixtures, e.g., preparing a silica nanoparticle based aqueous mixture and a polyvinyl alcohol aqueous based mixture separately, then mixing appropriate mass ratios of the two mixtures together to achieve the desired coating mixture. Other methods comprise adding appropriate amounts of silica nanoparticles and polyvinyl alcohol in water to generate a single aqueous mixture. The mixture can be agitated at temperatures for a period of time sufficient to ensure uniform dissolution of the solute to yield a silica nanoparticle coating mixture.

Mixing silica nanoparticles and polyvinyl alcohol can further comprise adding an additive mixture to the dissolved silica nanoparticles and polyvinyl alcohol. The additive mixture can also be dissolved in an aqueous solution. The additive mixture can comprise chloride salt, borate salt, or 2,5-dihydroxyterephthalic acid, or any combinations thereof.

Applying the silica nanoparticle mixture to the porous support can be done by methods known in the art for creating a layer of desired thickness. Applying the coating mixture to the substrate can be achieved by first immersing the substrate into the coating mixture, and then drawing the solution onto the substrate by applying a negative pressure gradient across the substrate until the desired coating thickness can be achieved. Applying the coating mixture to the substrate can be achieved by blade coating, spray coating, dip coating, die coating, or spin coating. The method can further comprise gently rinsing the substrate with deionized water after each application of the coating mixture to remove excess loose material. The coating is done such that a composite layer of a desired thickness is created. The number of layers can range from 1 to 250, from 1 to 100, from 1 to 50, from 1 to 20, from 1 to 15, from 1 to 10, or from 1 to 5, 5-10, 10-20, 20-50, 50-100, 100-200, 200-300, 100-150, 20, 100, 200, or 150, or any number layers in a range bounded by any of these values. This process results in a fully coated substrate as a silica nanoparticle coated support.

Curing the silica nanoparticle coated support can then be done at a temperature for a period of time sufficient to allow crosslinking between the moieties of the aqueous coating mixture deposited on the porous support. The coated substrate can be exposed to heating for about 30 minutes; with the time required decreasing when increasing temperatures. This process results in a cured membrane.

### Crosslinked GO Layer Coating

There is an additional step of resting the GO coating mixture at about room temperature for about 30 minutes to about 12 hours. In some embodiments, resting the coating mixture can be done for about 1 hour to about 6 hours. In some embodiments, resting the coating mixture can be done for about 3 hours. It is believed that resting the coating solution allows the graphene oxide and the cross-linker to begin covalently bonding in order to facilitate a final crosslinked GO layer. This process results in a crosslinked GO coating mixture.

In some embodiments, applying the coating mixture to the porous support can be done by methods known in the art for creating a layer of desired thickness. In some embodiments, applying the coating mixture to the substrate can be achieved by vacuum immersing the substrate into the coating mixture first, and then drawing the solution onto the substrate by applying a negative pressure gradient across the substrate until the desired coating thickness can be achieved. In some embodiments, applying the coating mixture to the substrate can be achieved by blade coating, spray coating, dip coating, die coating, or spin coating. In some embodiments, the method can further comprise gently rinsing the substrate with deionized water after each application of the coating mixture to remove excess loose material. In some embodiments, the coating is done such that a composite layer of a desired thickness is created. In some embodiments, the number of layers can range from 1 to 250, from 1 to 100, from 1 to 50, from 1 to 20, from 1 to 15, from 1 to 10, or from 1 to 5, 5-10, 10-20, 20-50, 50-100, 100-200, 200-300, 100-150, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, or 40, 20, 100, 200, or 150, or any number layers in a range bounded by any of these values. This process results in a fully coated substrate as a coated support.

For some methods, curing the coated support can then be done at a temperature for a period of time sufficient to facilitate crosslinking between the moieties of the aqueous coating mixture deposited on the porous support. In some embodiments, the substrate can be exposed to heating for about 30 minutes; with the time required decreasing when increasing temperatures. This process results in a cured GO composite membrane.

### Application of Salt Rejection Layer

In some embodiments, the method for fabricating membranes further comprises applying a salt rejection layer to the membrane or a cured membrane to yield a membrane with a salt rejection layer. In some embodiments, the salt rejection layer can be applied by dipping the cured membrane into a solution of precursors in mixed solvents. In some embodiments, the precursors can comprise an amine and an acyl chloride. In some embodiments, the precursors can comprise meta-phenylenediamine and trimesoyl chloride. In some embodiments, the concentration of meta-phenylenediamine can be about 0.01-10 wt%, about 0.1-5 wt%, about 5-10 wt%, about 1-5 wt%, about 2-4 wt%, about 4 wt%, about 2 wt%, or about 3 wt%. In some embodiments, the trimesoyl chloride concentration can be about 0.001 vol% to about 1 vol%, about 0.01-1 vol%, about 0.1-0.5 vol%, about 0.1-0.3 vol%, about 0.2-0.3 vol%, about 0.1-0.2 vol%, or about 0.14 vol%. In some embodiments, the coating mixture of meta-phenylenediamine and trimesoyl chloride can be allowed to rest for a sufficient amount of time such that polymerization can take place before the dipping occurs. In some embodiments, the method comprises resting the mixture at room temperature for about 1-6 hours, about 5 hours, about 2 hours, or about 3 hours. In some embodiments, the method comprises dipping the cured membrane in the coating mixture for about 15 seconds to about 15 minutes; about 5 seconds to about 5 minutes, about 10 seconds to about 10 minutes, about 5-15 minutes, about 10-15 minutes, about 5-10 minutes, or about 10-15 seconds.

In some embodiments, the salt rejection layer can be applied by coating the cured membrane in separate solutions of an aqueous meta-phenylenediamine and a solution of trimesoyl chloride in an organic solvent. In some embodiments, the meta-phenylenediamine solution can have a concentration in a range of about 0.01-10 wt%, about 0.1-5 wt%, about 5-10 wt%, about 1-5 wt%, about 2-4 wt%, about 4 wt%, about 2 wt%, or about 3 wt%. In some embodiments, the trimesoyl chloride solution can have a concentration in a range of about 0.001-1 vol%, about 0.01-1 vol%, about 0.1-0.5 vol%, about 0.1-0.3 vol%, about 0.2-0.3 vol%, about 0.1-0.2 vol%, or about 0.14 vol%. In some embodiments, the method comprises dipping the cured membrane in the aqueous meta-phenylenediamine for a period of about 1 second to about 30 minutes, about 15 seconds to about 15 minutes; or about 10 seconds to about 10 minutes. In some embodiments, the method further comprises removing excess meta-phenylenediamine from the cured membrane. Then, the method further comprises dipping the cured membrane into the trimesoyl chloride solution for a period of about 30 seconds to about 10 minutes, about 45 seconds to about 2.5 minutes, or about 1 minute. Finally, the method comprises subsequently drying the resultant assembly in an oven to yield a membrane with a salt rejection layer of polyamide made from meta-phenylenediamine and trimesoyl chloride. In some embodiments, the cured membrane can be dried at about 45 °C to about 200 °C for a period of about 5 minutes to about 20 minutes, at about 75 °C to about 120 °C for a period of about 5 minutes to about 15 minutes, or at about 90 °C for about 10 minutes. This process results in a membrane with a salt rejection layer.

### Application of a Protective Coating

In some embodiments, the method for fabricating a membrane can further comprises subsequently applying a protective coating on the GO composite membrane. In some embodiments, applying a protective coating comprises adding a hydrophilic polymer layer. In some embodiments, applying a protective coating comprises coating the membrane with a PVA aqueous solution. Applying a protective layer can be achieved by methods known in the art, such as blade coating, spray coating, dip coating, spin coating, and etc. In some embodiments, applying a protective layer can be achieved by dip coating of the membrane in a protective coating solution for about 1-10 minutes, about 1-5 minutes, about 5 minutes, or about 2 minutes. In some embodiments, the method further comprises drying the membrane at a about 75 °C to about 120 °C for about 5-15 minutes, or at about 90 °C for about 10 minutes. This process results in a membrane with a protective coating.

### IX. Methods of Dehydrating.

A method of dehydrating an unprocessed fluid comprises contacting the unprocessed fluid to one or more of the aforementioned membranes. The membranes used can be those without a salt rejection layer. Exposing the unprocessed fluid to the membrane can result in allowing the water to pass through the membrane to a second fluid, or effluent. Exposing the unprocessed fluid to the membrane further comprises allowing sufficient time for the water to pass through the membrane so that the processed fluid achieves the desired water concentration. The method can allow for processing of unprocessed fluid in a gaseous phase where the water being removed is water vapor. The method can allow for processing of unprocessed fluid is in the liquid phase where the water being removed is in liquid water.

The method can comprise allowing water vapor to pass through the membrane. The method can comprise allowing liquid water to pass through the membrane. The method can comprise allowing a combination of water vapor and liquid water to pass through the membrane.

The method can be used to achieve desired water concentrations of the processed fluid, where the desired water concentrations is such that water vapor content is reduced to the desired levels to avoid condensation, mold growth, and/or spoliation of food in enclosed spaces.

### X. Methods of Controlling Water or Solute Content.

A method for removing a solute from an unprocessed solution can comprise exposing the unprocessed solution to one or more of the aforementioned membranes. The method further comprises passing the unprocessed solution through the membrane, whereby the water is allowed to pass through while solutes are retained, thereby reducing the solute content of the resulting water. Passing the unprocessed water containing solute through the membrane can be accomplished by applying a pressure gradient across the membrane. Applying a pressure gradient can be achieved by supplying a means of producing head pressure across the membrane. In some embodiments, the head pressure can be sufficient to overcome osmotic back pressure.

Providing a pressure gradient across the membrane can be achieved by producing a positive pressure in the first reservoir and producing a negative pressure in the second reservoir, or producing a positive pressure in the first side of the membrane and producing a negative pressure in the second side of the membrane. A means of producing a positive pressure in the first reservoir can be accomplished by using a piston, a pump, a gravity drop, and/or a hydraulic ram. A means of producing a negative pressure in the second reservoir can be achieved by applying a vacuum or withdrawing fluid from the second reservoir.

### EXAMPLES

It has been discovered that embodiments of the selectively permeable membranes described herein have improved performance as compared to other selectively permeable membranes. These benefits are further demonstrated by the following examples, which are intended to be illustrative of the disclosure only, but are not intended to limit the scope or underlying principles in any way.

### Example 1.1.1: Preparation of Graphene Oxide Dispersion (GO-1)

GO was prepared from graphite using the modified Hummers method. Graphite flakes (2.0 g, Sigma Aldrich, St. Louis, MO, USA, 100 mesh) were oxidized in a mixture of NaNO₃ (2.0 g, Aldrich), KMnO₄ of (10 g, Aldrich) and concentrated H₂SO₄ (96 mL, 98%, Aldrich) at 50 °C for 15 hours. The resulting paste like mixture was poured onto 400 g of ice followed by adding 30 mL of hydrogen peroxide (30 %, Aldrich). The resulting solution was then stirred at room temperature for 2 hours, filtered through a filter paper and washed with DI water. The solid was collected and then dispersed in DI water with stirring, centrifuged at 6300 rpm for 40 minutes, and the aqueous layer was decanted off. The remaining solid was then dispersed in DI water again, and the washing process was repeated 4 times. The purified GO was then dispersed in DI water under sonication (power of 10 W) for 2.5 hours to get the desired GO dispersion containing 0.4 wt% GO as GO-1.

### Example 1.1.2: Synthesis of Cross-linker Compound CLC-3.1 (outside the scope of the invention)

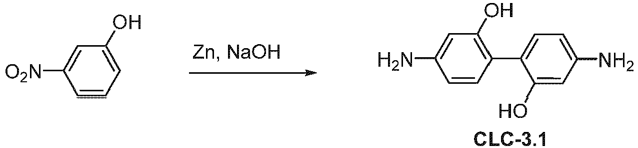

To a mixture of 3-nitrophenol (6.95 g, 0.05 mol, Aldrich) in ethanol (50 mL, Aldrich), was added NaOH aqueous solution (25 mL, 12 M, Aldrich), and zinc powder (13 g, 0.2 mol, Aldrich) under a nitrogen atmosphere (Airgas, San Marcos, CA, USA). The resulting mixture was stirred for 10 hours and filtered. The filtrate was acidified by acetic acid (Aldrich) to pH 4, and a precipitate formed. The solid was collected by filtration, washed with water to neutral, and dried under vacuum using a vacuum oven (Thermo Scientific Precision 6500, Thermo Fisher Scientific Waltham, MA USA) at 60 °C/2 torr to afford the desired product (3.8 g, 70% yield) **CLC-3.1.** The compound was confirmed by LC-MS: 217 [M+1]⁺. ¹H NMR (DMSO-d₆, ppm): δ 8.9 (bs, 4H), 6.77 (bs, 2H), 6.15 (bs, 4H).

### Example 1.1.3: Synthesis of Cross-linker Compound CLC-3.2 (outside the scope of the invention)

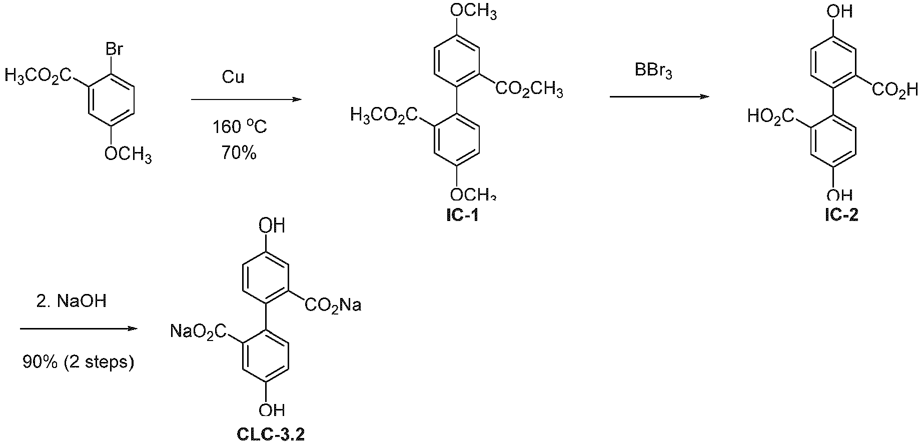

A mixture of methyl 2-bromo-5-methoxybenzoate (10 g, 46.8 mmol, Aldrich), and freshly activated copper powder (12 g, 189 mmol, Aldrich) in anhydrous dimethylformamide (DMF) (50 mL, Aldrich) was heated at 160 °C for 16 hours under an argon atmosphere (Airgas). The reaction mixture was then cooled to room temperature and poured into ethyl acetate (300 mL, Aldrich). After filtering, the solid was washed with water and brine, dried over Na₂SO₄ (Aldrich), and then purified by flash column chromatography on silica gel using eluents of hexanes/dichloromethane (100% to 50% hexanes, Aldrich) to give a pale yellow oil (4.7 g, in 70% yield) as the desired intermediate IC-1. ¹H NMR (CDCl₃): δ 7.50 (d, J = 2.4 Hz, 2H), 7.13 (d, J = 8.3 Hz, 2H), 7.07 (dd, J = 2.4 and 8.3 Hz, 2H), 3.89 (s, 6H), 3.64 (s, 6H).

To a solution of IC-1 in anhydrous dichloromethane (60 mL, Aldrich), BBr₃ in dichloromethane (60 mL, 1M, 60 mmol) (Aldrich) was added at -78 °C. The whole solution was then kept stirring at -78 °C and then allowed to warm up slowly to room temperature overnight. The resulting mixture was then poured into an ice water mixture (200 mL) and then extracted three times by ethyl acetate (3 × 300 mL, Aldrich). The organic phase was washed with brine, dried over Na₂SO₄ (Aldrich), filtered, concentrated and reprecipitated in ethyl acetate/hexanes (Aldrich) to give a white solid (3.8 g, 98% yield) as a desired intermediate **IC-2**. ¹H NMR (DMSO-d₆): δ 12.20 (s, 2H), 9.56 (s, 2H), 7.20 (d, J = 2.0 Hz, 2H), 6.90 (d, J = 8.3 Hz, 2H), 6.86 (dd, J = 2.0 and 8.3 Hz, 2H). LC-MS: 273 [M-H].

To a solution of **IC-2** in 30 mL methanol (Aldrich), a NaOH aqueous solution (1.12 g, 28 mmol in 10 mL water, Aldrich) was added. The mixture was stirred for 30 minutes and then the solvents were removed using a vacuum oven (Thermo Scientific Precision 6500, Thermo Fisher) at 60 °C/2 torr to give a white solid (4.45 g, 100% yield) as the desired product **CLC-3.2**. ¹H NMR (D₂O): δ 7.14 (d, J = 8.4 Hz, 2H), 6.91 (d, J = 2.6 Hz, 2H), 6.82 (dd, J = 2.6 Hz and 8.4 Hz, 2H).

### Example 1.1.4: Synthesis of Cross-linker Compound CLC-4.1

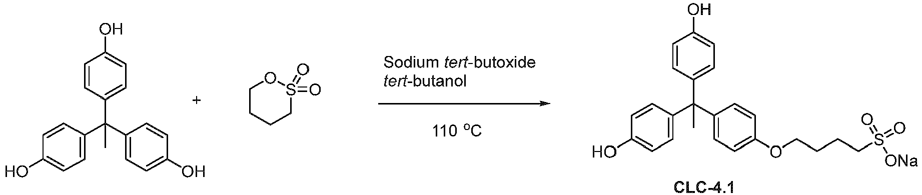

To tert-butanol (90 mL, Aldrich) at room temperature, 4,4',4"-(ethane-1,1,1-triyl)triphenol (5 g, 16 mmol, Aldrich) was added followed by sodium tert-butoxide (1.57 g, 16 mmol, Aldrich) with stirring. The mixture was then stirred at 110 °C for 15 minutes. Subsequently 1,4-butanesultone (1.67 mL, 16 mmol, Aldrich) was added to the mixture, and the reaction was continued overnight. After about 16 hours, the reaction mixture was then cooled. To the reaction mixture hexanes (200 mL, Aldrich) were added and the resulting solution was stirred for 30 minutes. The precipitate was collected, and washed with fresh hexanes (about 500 mL, Aldrich). Then the collected precipitate was added in isopropanol (400 mL, Aldrich) and stirred for 2 hours. Then hexanes (400 mL, Aldrich) weres added to the resulting mixture. After stirring for 5 minutes, the precipitate was collected. The product was dried at 60 °C/2 torr in a vacuum oven (Thermo Scientific Precision 6500, Thermo Fisher Scientific Waltham, MA USA) overnight to give a white powder (6.25 g, 82.4% yield) as the desired product **CLC-4.1**. ¹H-NMR (D₂O): δ 1.63 (m, 4H), 1.77(s, 3H), 2.72 (t, 2H), 3.65 (t, 2H), 6.51 (t, 6H), 6.76 (t, 6H).

### Example 1.1.5: Synthesis of Cross-linker Compound CLC-5.1 (outside the scope of the invention)

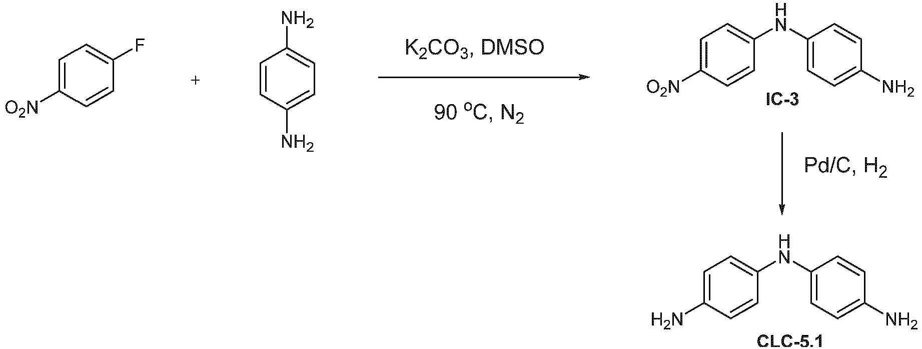

Benzene-1,4-diamine (5.4 g, 50 mmol) (Aldrich) and 1-fluoro-4-nitrobenzene (5.3 mL, 50 mmol) (Aldrich) were dissolved in dimethylsulfoxide (75 mL, Aldrich), and potassium carbonate (13.8 g, 100 mmol, Aldrich) was added. The reaction mixture was then heated with an oil bath at 90 °C and stirred overnight under nitrogen atmosphere (Airgas). The reaction mixture was cooled to room temperature and added into DI water (250 mL) in a slow stream with stirring and stirred until a solid precipitated out. The reaction mixture was then filtered, and the resulting dark brown solid was washed with plenty of DI water. The crude product was purified by flash column chromatography on silica gel (Aldrich) eluting with 20% to 40% ethyl acetate in hexanes (Aldrich) to provide the desired intermediate compound (6.1 g, 53%) as **IC-3**.

A mixture of **IC-3**, palladium on carbon (0.5 g, 5%, Aldrich) in ethanol (200 mL, Aldrich) was hydrogenated at 30 psi overnight. After the catalyst being filtered off, the filtrate was concentrated, and re-precipitated in dichloromethane/hexanes to give a solid (1.15g, 66% yield) as the desired product **CLC-5.1**. The product was confirmed by LC-MS: 200 [M+1]⁺.

### Example 1.1.6: Synthesis of Cross-linker Compound CLC-5.2 (outside the scope of the invention)

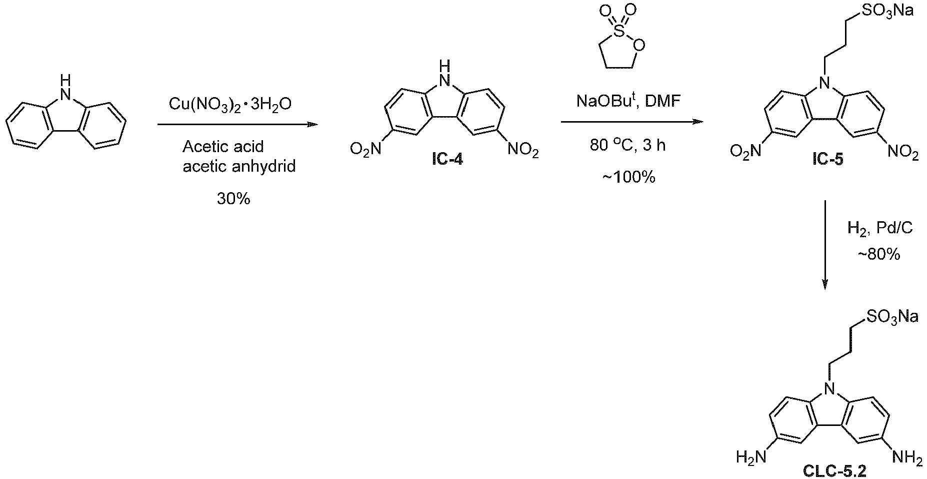

A suspension of Cu(NO₃)₂·3H₂O (Aldrich) in acetic acid/acetic anhydride (20 mL/30 mL, Aldrich) was stirred for 1.5 hours at room temperature. To the mixture, 9H-carbazole (4.18 g, 25 mmol, Aldrich) was added in small portion at 15 °C with a cold water bath. While kept stirring, the mixture was warmed up to room temperature over a period of 30 minutes, and subsequently heated at 90 °C for 30 minutes. After cooled to room temperature, the mixture was poured into water (250 mL) and the resulting precipitate was filtered, washed with water, dried in a vacuum oven (Thermo Scientific Precision 6500, Thermo Fisher Scientific Waltham, MA USA) at 60 °C/2 torr. The solid was re-dissolved in acetone (Aldrich) and loaded on silica gel (Aldrich), then purified by flash column chromatography using eluents of hexanes/dichloromethane (3:2 to 1:3, Aldrich). The desired fractions were collected, concentrated and re-precipitated in methanol (Aldrich) to give a yellow solid (1.9 g, 30% yield) as the desired intermediate compound **IC-4** which wasConfirmed by LCMS: 256 [M-H].

To a suspension of **IC-4** in anhydrous DMF (20 mL, Aldrich), was added sodium *tert*-butoxide (0.285g, 3 mmol, Aldrich), and the solution turned to red immediately. To the resulting solution, 1,3-propanesultone (0.44 g, 3.6 mmol, Aldrich) was added, and the solution was heated at 80 °C for 2.5 hours. After cooled to room temperature, the mixture was poured into isopropanol (300 mL, Aldrich) to give a yellow precipitate, which was filtered and dried to give the desired intermediate (1.05 g, in 90% yield) as **IC-5**. IC-5 was confirmed by LC-MS: 401 [M+1]⁺.

A mixture of **IC-5,** palladium on carbon (5%, 0.5 g, Aldrich) in water/methanol (20 mL/100 mL, Aldrich) was hydrogenated at 30 psi for 5 hours. After the catalyst was filtered off, the filtrate was concentrated to 5 mL and then poured into isopropanol (50 mL, Aldrich). The resulting suspension was poured into diethyl ether (200 mL, Aldrich) to give a white precipitate, which was collected by filtration and dried in air to yield the desired product (0.8 g, 92% yield) as CLC-5.2. CLC-5.2 was confirmed by LCMS: 318 [M-H].

### Example 1.1.6: Synthesis of Cross-linker Compound CLC-5.3 (outside the scope of the invention

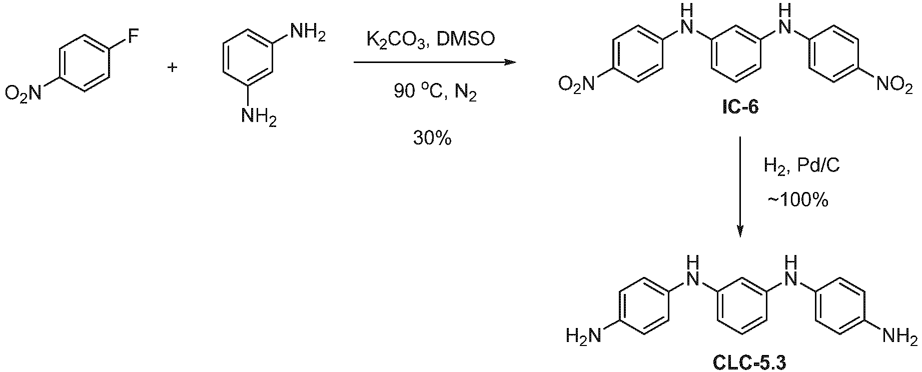

A mixture of 4-fluoro-1-nitrobenzene (10.6 mL, 100 mmol, Aldrich), meta-phenylenediamine (5.4 g, 50 mmol, Aldrich) and potassium carbonate (16.6 g, 120 mmol, Aldrich) in anhydrous dimethyl sulfoxide (DMSO) (80 mL, Aldrich) was heated to 105 °C for 20 hours. The resulting mixture was poured into water (250 mL) slowly and then extracted with dichloromethane (500 mL, Aldrich). The organic layer was separated, washed with brine, dried over Na₂SO₄, filtered, concentrated and then purified by flash column chromatography using eluents of dichloromethane/hexanes (1:10 to 3:2, Aldrich) to give an orange solid (4.8 g, 27% yield) as the desired intermediate **IC-6**.

A suspension of **IC-6** (2.0 g), palladium on carbon (0.75g, 5%, Aldrich) in water/ethanol (40 mL/80 mL, Aldrich) was hydrogenated under 30 psi for 16 hours. After the catalyst was filtered off, the filtrate was concentrated, poured into isopropanol (100 mL, Aldrich). The solid formed was collected by filtration and dried under vacuum using a vacuum oven (Thermo Scientific Precision 6500, Thermo Fisher) at 60 °C/2 torr to give 1.0 g of the desired product in 60% yield as **CLC-5.3.** CLC-5.3 was confirmed by LC-MS: 291 [M+1]⁺.

### Example 1.1.7: Synthesis of Cross-linker Compound CLC-5.4 (outside the scope of the invention)

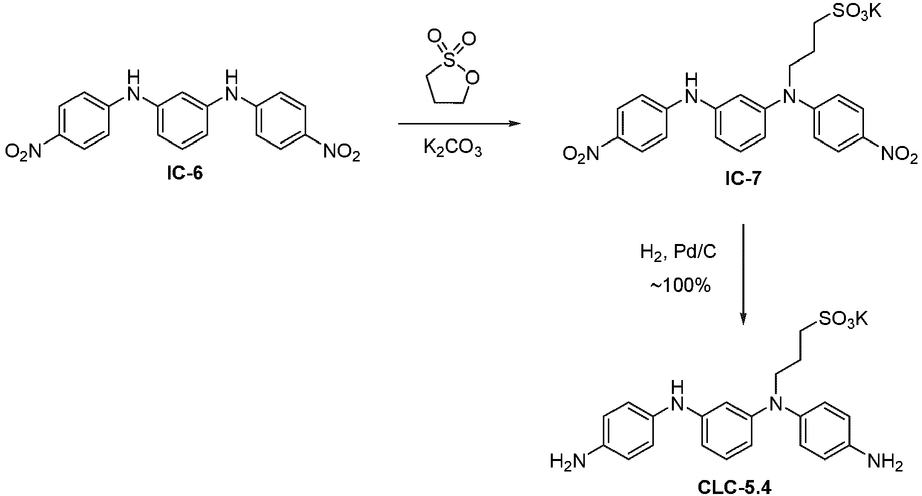

To a mixture of **IC-6**, K₂CO₃ (0.414 g, 3 mmol) (Aldrich) in anhydrous dimethyl sulfoxide (DSMO) (10 mL) (Aldrich), was added 1,3-propanesultone (0.732g, 6 mmol) (Aldrich). The mixture was then heated at 80 °C for 2 days. After cooled to room temperature, the mixture was poured into isopropanol (200 mL) (Aldrich). The resulting orange precipitate was filtered and dried in a vacuum oven (Thermo Scientific Precision 6500, Thermo Fisher) at 60 °C/2 torr for 3 hours to give a solid (1.4 g, 96% yield) as the desired intermediate **IC-7**.

A suspension of **IC-7**, palladium on carbon (5%, 0.75g) (Aldrich) in water/ethanol (40 mL/80 mL) (Aldrich) was hydrogenated under 30 psi for 16 hours. After the catalyst was filtered off, the filtrate was concentrated, poured into isopropanol (100 mL) (Aldrich). The solid formed was collected by filtration, and dried under vacuum using a vacuum oven (Thermo Scientific Precision 6500, Thermo Fisher) at 60 °C/2 torr to give 0.5 g of desired product in 41% yield as **CLC-5.4.** CLC-5.4 was confirmed by LC-MS: 413 [M+1]⁺.

### Example 1.1.8: Synthesis of Cross-linker Compound CLC-5.5 (Prophetic) (outside the scope of the invention)

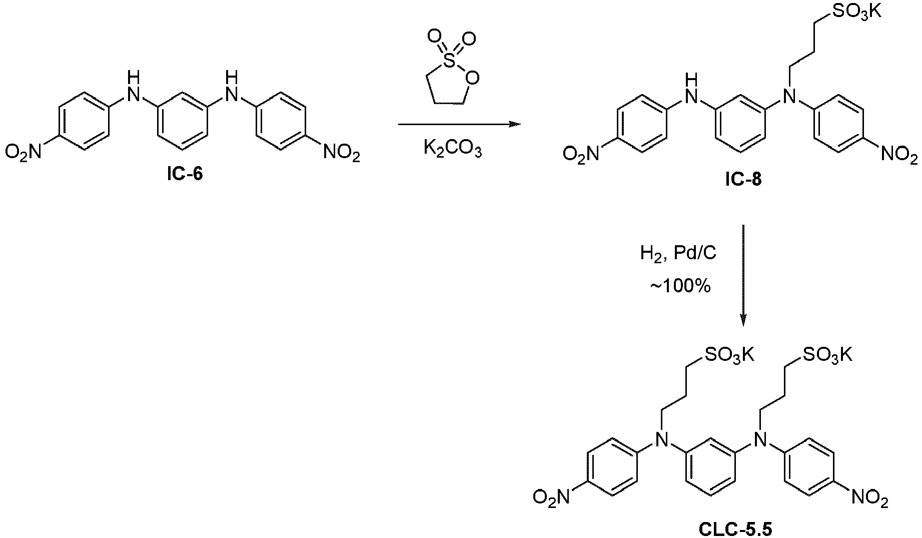

To a mixture of or **IC-6**, K₂CO₃ (0.414 g, 3 mmol, Aldrich) in anhydrous dimethyl sulfoxide (DSMO) (10 mL, Aldrich), was added 1,3-propanesultone (1.464 g, 12 mmol, Aldrich). The whole mixture was then heated at 80 °C for 2 days. After cooled to room temperature, the mixture was poured into isopropanol (200 mL, Aldrich). The resulting precipitate was filtered and dried in a vacuum oven (Thermo Scientific Precision 6500, Thermo Fisher) at 60 °C/2 torr for 3 hours to give a solid as the desired intermediate as **IC-8**.

A suspension of **IC-8** (1.83 g), palladium on carbon (0.75 g, 5%, Aldrich) in water/ethanol (40 mL/80 mL, Aldrich) can be hydrogenated under 30 psi for 16 hours. After the catalyst is filtered off, the filtrate can be concentrated, poured into isopropanol (100 mL, Aldrich). The solid can be collected by filtration and dried under vacuum using a vacuum oven (Thermo Scientific Precision 6500, Thermo Fisher) at 60 °C/2 torr to give the desired product, **CLC-5.5.**

### Example 1.1.9: Synthesis of Cross-linker Compound CLC-6.1 (outside the scope of the invention)

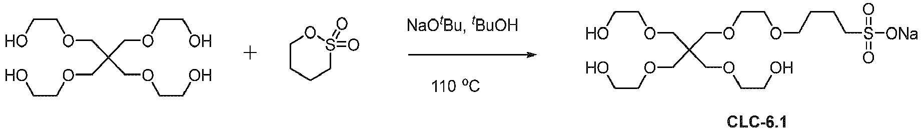

With stirring pentaerythritol ethoxylate (7 g, 22.4 mmol, Aldrich 416150, Mₙ = 270 avg, % EO/OH, Aldrich) was added followed by sodium tert-butoxide (2.15 g, 22.4 mmol, Aldrich) in *tert*-butanol (100mL, Aldrich) at room temperature . The mixture was then heated at 110 °C for 70 minutes with stirring. Subsequently, 1,4-butanesultone (2.29 mL, 22.4 mmol, Aldrich) was added to the reaction mixture and the resulting mixture was stirred overnight. After 17 hours, the excess solution was decanted. The precipitates were washed with hexanes (Aldrich). The precipitates were then dissolved in methanol (125 mL, Aldrich) and dried *in vacuo* at 50 °C giving a viscous, transparent wax as the desired intermediate CLC-6.1 (8.77 g, yield 73%). ¹H-NMR (D₂O): δ 1.7-1.8 (m, 4H), 2.90 (t, 2H), 3.3 (s, 8H), and 3.4-3.7 (m, 21H).

### Example 1.1.10: Synthesis of Cross-linker Compound CLC-6.2 (outside the scope of the invention)

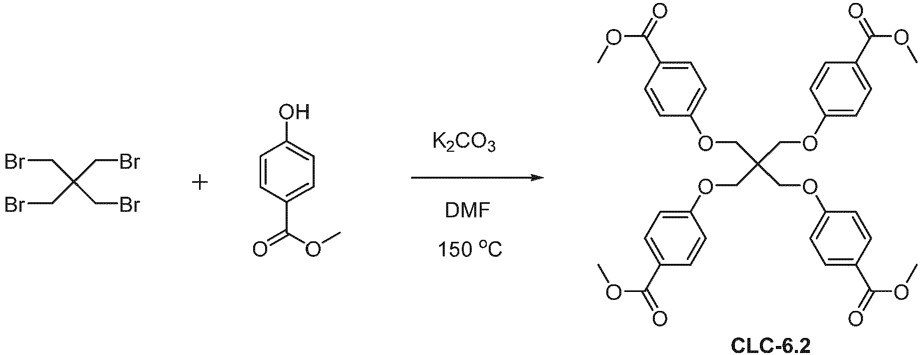

Into *N,N'*-dimethylformamide (100 mL) (Aldrich) at room temperature, pentaerythritol tetrabromide (6 g, 15.5 mmol, Aldrich) was added with stirring followed by methyl 4-hydroxybenzoate (9.42 g, 61.9 mmol, Aldrich), and then potassium carbonate (27.80 g, 201.5 mmol, Aldrich). The resulting mixture was heated to 150 °C overnight. After about 22 hours, the reaction was cooled down to room temperature and the reaction mixture was poured into DI water (1000 mL) and extracted with ethyl acetate (800 mL, Aldrich). The organic layer was separated and concentrated under vacuum on a rotary evaporator. The resulting residue was purified by column chromatography eluting with a gradient of hexanes and ethyl acetate to give a white powder as the desired product **CLC-6.2** (7.19 g, 69% yield). ¹H-NMR (TCE ???): δ 3.8 (s, 12H), 4.4 (s, 8H), 6.9 (d, 8H), and 7.9 (d, 8H).

### Example 1.1.11: Synthesis of Cross-linker Compound CLC-6.3 (outside the scope of the invention)

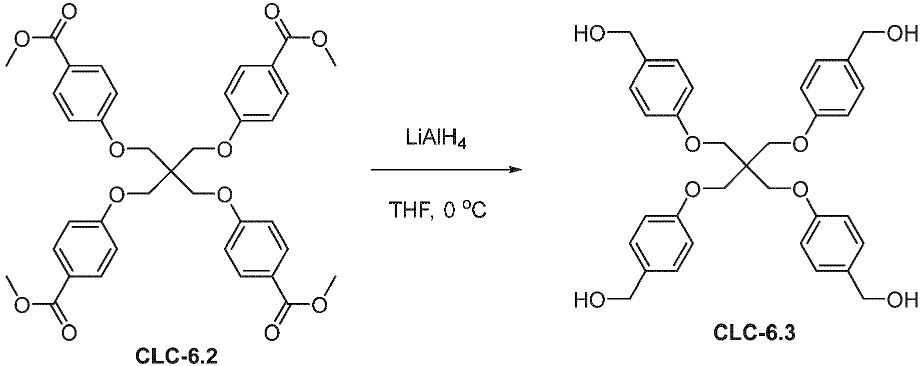

Into 50 mL of anhydrous tetrahydrofuran cooled in an ice bath at 0 °C, **CLC-6.2** (6.5 g, 9.7 mmol) was added. LiAlH₄ (1M in diethyl ether, 58 mL, 58.2 mmol, Aldrich) cooled to 0 °C was added dropwise. Thenthe reaction solution was allowed to warm to room temperature and stirred for 4 hours. The reaction mixture was poured into chilled water (1000 mL) and neutralized with HCI (1M, Aldrich). Then, the solution was extracted with ethyl acetate (800 mL, Aldrich), layers were separated, and the organic layer was concentrated. The crude product was purified by column chromatography eluting with a gradient of ethyl acetate and methanol to give a white powder as the desired product **CLC-6.3** (3.44 g, 63.5% yield). ¹H-NMR (DMSO-d₆): δ 4.25 (s, 8H), 4.39 (s, 8H), 5.04 (s, 4H), 6.91 (d, 8H), 7.21 (d, 8H).

### Example 1.1.11: Synthesis of Cross-linker Compound CLC-6.4 (outside the scope of the invention)

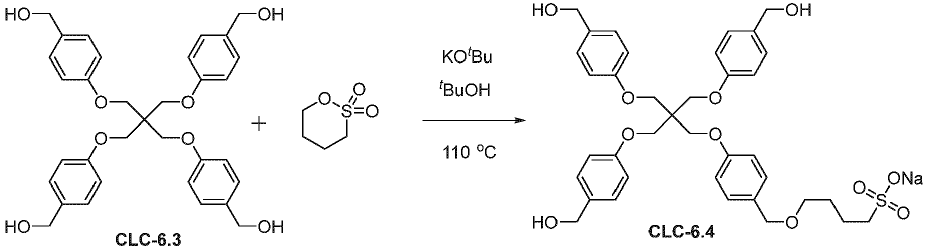

To tert-butanol (60 mL, Aldrich) at room temperature, **CLC-6.3** was added with stirring followed by sodium tert-butoxide (566 mg, 5.89 mmol, Aldrich). The mixture was heated at 110 °C for 40 minutes. Then 1,4-butane sultone (0.60 mL, 5.89 mmol, Aldrich), additional *tert*-butanol (75 mL, Aldrich) and N,N'-dimethylformamide (20 mL, Aldrich) were added to the reaction mixture. After stirring for 24 hours, the product was precipitated out by adding hexanes (400 mL, Aldrich). The resulting mixture was stirred for 15 minutes and then filtered. The collected solid was then added into hexanes (100 mL, Aldrich). After stirring for another 15 minutes, the precipitate was collected by filteration again. The solid corrected was then added into a mixture of hexanes (100 mL, Aldrich) and isopropanol (30 mL, Aldrich). After stirring for 15 minutes, the precipitate was filtered and dried at 60 °C in a vacuum oven at 2 torr (Thermo Scientific Precision 6500, Thermo Fisher Scientific Waltham, MA USA) for 4 hours to give a white powder as the desired product **CLC-6.4** (3.25 g, 76.8% yield). ¹H-NMR (DMSO-d₆): δ 1.56 (m, 4H), 2.50 (m, 2H), 4.25-4.38 (m, 16H), 5.06 (s, 2H), 6.93 (d, 8H), and 7.20 (d, 8H).

### Example 2.1.1: Membrane Preparation - Support Pretreatment

**Preparing a Support:** Porous substrates were purchased to be used as porous supports from various sources and materials, such as PET (Hydranautics, San Diego, CA USA), PET2 (Hydranautics), and polyamide (Nylon) (0.1 µm pore, Aldrich). Selected substrates, corresponding to embodiments shown in Table 1 and Table 2, were trimmed to a 7.6 cm diameter. In the embodiments where the substrates were in physical communication with a PVA containing layer, the substrates were pretreated with PVA. Unless otherwise specified, for all other embodiments the substrates were pretreated with dopamine. Only those porous supports pretreated with dopamine fall under the scope of the claims.

**PVA Substrate Pre-treatment:** (outside the scope of the invention) A 7.6 cm diameter substrate was dipped into a 0.05 wt % PVA (Aldrich) in DI water solution. The substrate was then dried in an oven (DX400, Yamato Scientific Co., Ltd. Tokyo, Japan) at 65 °C to yield a pretreated substrate.

**Dopamine Substrate Pre-treatment:** A 7.6 cm diameter substrate was dip-coated in a dopamine solution (2 g/L dopamine (Aldrich) and 1.3 g/L Trizma base buffer (Aldrich) at pH 8.5). The dopamine was polymerized to form polydopamine on the substrate. Then, the polydopamine-coated substrate was dried in an oven (DX400, Yamato Scientific Co., Ltd. Tokyo, Japan) at 65 °C to yield a pre-treated substrate.

**Table 1: Membrane Embodiments without a SiO₂ Nanoparticle Layer or a Salt Rejection Layer.**

| **Embodiment** | **Cross-linker** | **Mass of Crosslinker to GO** | **Substrate Material** | **Application Method/Pre-Treatment** | **Coating Thickness (nm or lyr)** | **Curing** | |
|---|---|---|---|---|---|---|---|
| | | | | | | **Temp (°C)** | **Time (min)** |
| **MD-1.2.11.1.1** | CLC-1* | 83:16 | PET | Filtration/ PT:PVA | 200 | 90 | 30 |
| **MD-1.1.21.1.1** | CLC-2.1* | 1:1 | Nylon 0.1 µm Pore | Filtration/ PT:Dopamine | 20 | 80 | 30 |
| **MD-1.1.21.1.2** | CLC-2.1* | 3:1 | Nylon 0.1 µm Pore | Filtration/ PT:Dopamine | 20 | 80 | 30 |
| **MD-1.1.21.1.3** | CLC-2.1* | 7:1 | Nylon 0.1 µm Pore | Filtration/ PT:Dopamine | 20 | 80 | 30 |
| **MD-1.1.22.1.1** | CLC-2.2* | 3:1 | Nylon 0.1 µm Pore | Filtration/ PT:Dopamine | 20 | 80 | 30 |
| **MD-1.1.22.1.2** | CLC-2.2* | 7:1 | Nylon 0.1 µm Pore | Filtration/ PT:Dopamine | 20 | 80 | 30 |
| **MD-1.1.31.1.1** | CLC-3.1* | 3:1 | Nylon 0.1 µm Pore | Filtration/ PT:Dopamine | 20 | 80 | 30 |
| **MD-1.1.31.1.2** | CLC-3.1* | 7:1 | Nylon 0.1 µm Pore | Filtration/ PT:Dopamine | 20 | 80 | 30 |
| **MD-1.1.31.1.3** | CLC-3.1* | 15:1 | Nylon 0.1 µm Pore | Filtration/ PT:Dopamine | 20 | 80 | 30 |
| **MD-1.2.31.1.1 (Prop.)** | CLC-3.1* | 3:1 | Nylon 0.1 µm Pore | Dip Coating/ PT:Dopamine | 20 | 80 | 30 |
| **MD-1.1.32.1.1 (Prop.)** | CLC-3.2* | 3:1 | Nylon 0.1 µm Pore | Filtration/ PT:Dopamine | 20 | 80 | 30 |
| **MD-1.1.32.1.2 (Prop.)** | CLC-3.2* | 7:1 | Nylon 0.1 µm Pore | Filtration/ PT:Dopamine | 20 | 80 | 30 |
| **MD-1.1.32.1.3 (Prop.)** | CLC-3.2* | 15:1 | Nylon 0.1 µm Pore | Filtration/ PT:Dopamine | 20 | 80 | 30 |
| **MD-1.2.32.1.4 (Prop.)** | CLC-3.2* | 3:1 | Nylon 0.1 µm Pore | Dip Coating/ PT:Dopamine | 20 | 80 | 30 |
| **MD-1.1.41.1.1** | CLC-4.1 | 3:1 | Nylon 0.1 µm Pore | Filtration/ PT:Dopamine | 20 | 80 | 30 |
| **MD-1.1.41.1.2** | CLC-4.1 | 7:1 | Nylon 0.1 µm Pore | Filtration/ PT:Dopamine | 20 | 80 | 30 |
| **MD-1.1.41.1.3** | CLC-4.1 | 15:1 | Nylon 0.1 µm Pore | Filtration/ PT:Dopamine | 20 | 80 | 30 |
| **MD-1.2.41.1.1 (Prop.)** | CLC-4.1 | 3:1 | Nylon 0.1 µm Pore | Dip Coating/ PT:Dopamine | 20 | 80 | 30 |
| **MD-1.1.51.1.1** | CLC-5.1* | 1:1 | Nylon 0.1 µm Pore | Filtration/ PT:Dopamine | 20 | 80 | 30 |
| **MD-1.1.51.1.2** | CLC-5.1* | 3:1 | Nylon 0.1 µm Pore | Filtration/ PT:Dopamine | 20 | 80 | 30 |
| **MD-1.1.51.1.3** | CLC-5.1* | 5:1 | Nylon 0.1 µm Pore | Filtration/ PT:Dopamine | 20 | 80 | 30 |
| **MD-1.2.51.1.1 (Prop.)** | CLC-5.1* | 3:1 | Nylon 0.1 µm Pore | Dip Coating/ PT:Dopamine | 20 | 80 | 30 |
| **MD-1.1.52.1.1 (Prop.)** | CLC-5.2* | 3:1 | Nylon 0.1 µm Pore | Filtration/ PT:Dopamine | 20 | 80 | 30 |
| **MD-1.1.53.1.1 (Prop.)** | CLC-5.3* | 3:1 | Nylon 0.1 µm Pore | Filtration/ PT:Dopamine | 20 | 80 | 30 |
| **MD-1.1.54.1.1 (Prop.)** | CLC-5.4* | 3:1 | Nylon 0.1 µm Pore | Filtration/ PT:Dopamine | 20 | 80 | 30 |
| **MD-1.1.61.1.1 (Prop.)** | CLC-6.1 * | 3:1 | Nylon 0.1 µm Pore | Filtration/ PT:Dopamine | 20 | 80 | 30 |
| **MD-1.1.63.1.1 (Prop.)** | CLC-6.3* | 3:1 | Nylon 0.1 µm Pore | Filtration/ PT:Dopamine | 20 | 80 | 30 |
| **MD-1.1.64.1.1 (Prop.)** | CLC-6.4* | 3:1 | Nylon 0.1 µm Pore | Filtration/ PT:Dopamine | 20 | 80 | 30 |
| Notes: | | | | | | | |
| [1] Numbering Scheme is the following: MD-J.K.LL.M.N | | | | | | | |
| | J = 1 - no salt rejection layer/no SiO₂ nanoparticle layer, 2 - no salt rejection layer/with SiO₂ nanoparticle layer, 3 - salt rejection layer/no SiO₂ nanoparticle layer, 4 - salt rejection Layer/with SiO₂ nanoparticle layer; | | | | | | |
| | K = 1 - mixture filtration method, 2 - mixture film/dip coating method, 3 - layer by layer method; LL = 11 - CLC-1 (PVA), 21 - CLC-2.1, 22 - CLC-2.2, 31 - CLC-3.1, 32 - CLC-3.2, 41 - CLC-4.1, 51 - CLC-5.1, 52 - CLC-5.2, 53 - CLC-5.3, 54 - CLC-5.4, 55 - CLC-5.5, 61 - CLC-6.1, 62 - CLC-6.2, 63 - CLC-6.3, 64 - CLC-6.4; | | | | | | |
| | M = 1 - no protective coating, 2 - with protective coating; | | | | | | |
| | N = device # within category. | | | | | | |
| [2] All PP and PVA/PP substrates are approximately 30 µm thick; whereas the nylon substrates can be between 65-125 µm thick. | | | | | | | |
| [3] (Prop.) - Indicates a prophetic example. | | | | | | | |
| [4] No additives. | | | | | | | |

| | | | | | | | |
|---|---|---|---|---|---|---|---|
| * Outside the scope of the invention | | | | | | | |

**Table 2: Membrane Embodiments with a SiO₂ Nanoparticle Layer but without a Salt Rejection Layer.**

| **Embodiment** | **Cross-linker** | **Mass of Crosslinker to GO** | **Substrate Material** | **Mass Ratio of PVA to Si-Nanoparticles** | **Application Method/Pre-treatment** | **Coating Thickness (nm or lyr)** | **Curing** | |
|---|---|---|---|---|---|---|---|---|
| | | | | | | | **Temp (°C)** | **Time (min)** |
| **MD-2.2.11.1.1 (Prop.)** | CLC-1* | 83:16 | PET | 3:1 | Film Coating/ PT:PVA | 200 | 90 | 30 |
| **MD-2.1.21.1.1 (Prop.)** | CLC-2.1* | 3:1 | PET | 3:1 | Filtration/ PT:Dopamine | 200 | 80 | 30 |
| **MD-2.1.22.1.1 (Prop.)** | CLC-2.2* | 3:1 | PET | 3:1 | Filtration/ PT:Dopamine | 200 | 80 | 30 |
| **MD-2.1.31.1.1 (Prop.)** | CLC-3.1* | 3:1 | PET | 3:1 | Filtration/ PT:Dopamine | 200 | 80 | 30 |
| **MD-2.1.32.1.1 (Prop.)** | CLC-3.2* | 3:1 | PET | 3:1 | Filtration/ PT:Dopamine | 200 | 80 | 30 |
| **MD-2.1.41.1.1** | CLC-4.1 | 3:1 | PET | 3:1 | Filtration/ PT:Dopamine | 150 | 80 | 30 |
| **MD-2.1.41.1.2** | CLC-4.1 | 3:1 | PET | 3:1 | Filtration/ PT:Dopamine | 200 | 80 | 30 |
| **MD-2.1.41.1.3** | CLC-4.1 | 3:1 | PET | 3:1 | Filtration/ PT:Dopamine | 250 | 80 | 30 |
| **MD-2.1.51.1.1 (Prop.)** | CLC-5.1* | 3:1 | PET | 3:1 | Filtration/ PT:Dopamine | 200 | 80 | 30 |
| **MD-2.1.52.1.1 (Prop.)** | CLC-5.2* | 3:1 | PET | 3:1 | Filtration/ PT:Dopamine | 200 | 80 | 30 |
| **MD-2.1.53.1.1 (Prop.)** | CLC-5.3* | 3:1 | PET | 3:1 | Filtration/ PT:Dopamine | 200 | 80 | 30 |
| **MD-2.1.54.1.1 (Prop.)** | CLC-5.4* | 3:1 | PET | 3:1 | Filtration/ PT:Dopamine | 200 | 80 | 30 |
| **MD-2.1.61.1.1 (Prop.)** | CLC-6.1* | 3:1 | PET | 3:1 | Filtration/ PT:Dopamine | 200 | 80 | 30 |
| **MD-2.1.63.1.1 (Prop.)** | CLC-6.3* | 3:1 | PET | 3:1 | Filtration/ PT:Dopamine | 200 | 80 | 30 |
| **MD-2.1.64.1.1 (Prop.)** | CLC-6.4* | 3:1 | PET | 3:1 | Filtration/ PT:Dopamine | 200 | 80 | 30 |
| Notes: | | | | | | | | |
| [1] Numbering Scheme is the following: MD-J.K.LL.M.N | | | | | | | | |
| | J = 1 - no salt rejection layer/no Si-nanoparticle layer, 2 - no salt rejection layer/with Si-nanoparticle layer, 3 - salt | | | | | | | |
| | rejection layer/no Si-nanoparticle layer, 4 - salt rejection Layer/with Si-nanoparticle layer | | | | | | | |
| | K = 1 -mixture filtration method, 2 -mixture film coating method, 3 -layer by layer method | | | | | | | |
| | LL = 11 - CLC-1 (PVA), 21 - CLC-2.1, 22 - CLC-2.2, 31 - CLC-3.1, 32 - CLC-3.2, 41 - CLC-4.1, 51 - CLC-5.1, 52 | | | | | | | |
| | - CLC-5.2, 53 - CLC-5.3, 54 - CLC-5.4, 55 - CLC-5.5, 61 - CLC-6.1, 62 - CLC-6.2, 63 - CLC-6.3, 64 - CLC-6.4 | | | | | | | |
| | M = 1 - no protective coating, 2 - with protective coating; | | | | | | | |
| | N = device # within category. | | | | | | | |
| [2] All PP and PVA/PP substrates are approximately 30 µm thick; whereas the nylon substrates can be between 65-125 µm thick. | | | | | | | | |
| [3] (Prop.) - Indicates a prophetic example. | | | | | | | | |

| | | | | | | | | |
|---|---|---|---|---|---|---|---|---|
| * Outside the scope of the invention | | | | | | | | |

### Example 2.1.2: Membrane Preparation - Crosslinked GO Coating Mixture Preparation

The procedure for creating a crosslinked GO coating mixture is dependent on the type of crosslinker used. All crosslinkers with the exception of PVA have a resting step before curing.

**Preparation of GO-PVA Coating Mixture:** A 10 mL of PVA solution (2.5 wt%) (**CLC-1**) was prepared by dissolving an appropriate amount of PVA (Aldrich) in DI water. The crosslinker CLC-1 is outside the scope of the invention. Then, the solutions of GO-1 (1 mL) and PVA-1 in an appropriate amount to achieve the mass ratios of Table 1 were combined with 10 mL of DI water and sonicated for 6 minutes to ensure uniform mixing to create a crosslinked GO coating solution.

**Preparation of Non-PVA Crosslinker GO Coating Mixture:** First, the GO dispersion, **GC-1**, was diluted with DI waterto create a 0.1 wt% GO aqueous solution. Second, a 0.1 wt% aqueous solution of crosslinker was created by dissolving an appropriate amount of crosslinker (e.g., CLC-2.1, CLC-2.2, and etc.) in DI water. For CLC-2.1 and CLC-2.2, (outside the scope of the invention) both metaphenylenediamine (MPD) (Aldrich) and 3,5-diaminobenzoic acid (DABA) (Aldrich) were purchased. A coating mixture for the embodiment was then created by mixing an aqueous solution of 0.1 wt% CLC-2.1 and 0.1 wt% GO at an appropriate weight ratio to achieve the mass ratio of 1:1 as shown in Table 1. The resulting solution was then rested for about 3 hours, or normally until the GO and amine pre-reacted. This process provides a crosslinked GO coating solution. Other non-PVA crosslinker GO coating mixtures shown in Table 1 were prepared in a similar way.

### Example 2.1.3: Membrane Preparation - Crosslinked Silicon-Nanoparticle Coating Mixture Preparation

A 10 mL of PVA solution (2.5 wt%) as **PVA-1** was prepared by dissolving an appropriate amount of PVA **(CLC-1)** (Aldrich) in DI water. The crosslinker CLC-1 is outside the scope of the claims. Similarly, a 10 mL of Silicon-nanoparticle solution (2.5 wt%) was prepared by dissolving an appropriate amount of SiO₂ (5-15 nm, Aldrich) in DI water. Then, the solutions of **GO-1** (1 mL) and **PVA-1** were combined in appropriate amounts to achieve the mass ratio of 16:83 as shown in Table 2, and was further combined with 10 mL of DI water, and sonicated for 6 minutes to ensure uniform mixing to create a crosslinked SiO₂ nanoparticle coating solution. Other crosslinked silicon nanoparticle coating mixtures shown in Table 2 are prepared similarly.

### Example 2.1.1: Membrane Preparation Procedure 1 - Membranes without a Crosslinked SiO₂ Nanoparticle Layer or a Salt Rejection Layer

**Crosslinked GO Mixture Application by Filtration:** For the embodiments identified in Table 1 where the application method was by filtration, the crosslinked GO coating solution was filtered through the pretreated substrate under gravity to draw the solution through the substrate such that a coating layer of the desired thickness was deposited on the support. The resulting membrane was then placed in an oven (DX400, Yamato Scientific) at the temperature specified in Table 1 for the specified time in Table 1 to facilitate crosslinking. This process generated a membrane without either a crosslinked SiO₂ nanoparticle layer or a salt rejection layer.

**Crosslinked GO Mixture Application by Dip Coating:** For the embodiments identified in Table 1 where the application method was by dip coating, the pretreated substrate can be coated in the crosslinked GO coating mixture by dip coating the substrate in the coating mixture. Next, the substrate can be then rinsed completely in DI water to remove any excess particles. This process of dipping the substrate into the coating mixture and then rinsing with DI water for the prescribed number of cycles can be repeated to prepare the desired number of layers or thickness of the coating layer. The resulting membrane can be then kept in an oven (DX400, Yamato Scientific) at the temperature for the period of time specified in Table 2 to facilitate further crosslinking. This process can result in a membrane without either a crosslinked SiO₂ nanoparticle layer or a salt rejection layer.

### Example 2.1.2: Membrane Preparation Procedure 2 - Membranes with a Crosslinked SiO₂ Nanoparticle Layer but without a Salt Rejection Layer

**Crosslinked SiO₂ Nanoparticle Mixture Application by Filtration:** For the embodiments identified in Table 2, the crosslinked SiO₂ nanoparticle coating solution was filtered through the pretreated substrate under gravity to draw the solution through the substrate such that a coating layer of the desired thickness was deposited on the support. The resulting membrane was then placed in an oven (DX400, Yamato Scientific) at 90 °C for 30 minutes to facilitate crosslinking. This process generated a crosslinked SiO₂ nanoparticle coated substrate.

**Crosslinked GO Mixture Application by Filtration:** For the embodiments identified in Table 2, the crosslinked GO coating solution was filtered through the above coated substrate under gravity to draw the solution through the substrate such that a coating layer of the desired thickness was deposited on the support. The resulting membrane was then placed in an oven (DX400, Yamato Scientific) at the temperature for the period of time specified in Table 2 to facilitate crosslinking. This process generated a membrane with a GO coated crosslinked SiO₂ nanoparticle layer but without a salt rejection layer.

### Example 2.2.1: Addition of a Salt Rejection Layer to a Membrane

To enhance the salt rejection capability of the membranes, selected embodiments, such as those without a SiO₂ nanoparticle layer in Table 3 or those with a SiO₂ nanoparticle layer in Table 4, were additionally coated with a polyamide salt rejection layer. A 3.0 wt% MPD aqueous solution was prepared by diluting an appropriate amount of MPD (Aldrich) in DI water. A 0.14 vol% trimesoyl chloride solution was made by diluting an appropriate amount of trimesoyl chloride (Aldrich) in isoparrifin solvent (Isopar E & G, Exxon Mobil Chemical, Houston TX, USA). The GO-MPD coated membrane was then dipped in the aqueous solution of 3.0 wt% of MPD (Aldrich) for a period of about 10 seconds to about 10 minutes depending on the type of substrate and then removed. Excess solution remaining on the membrane was removed by air dry. Then, the membrane was dipped into the 0.14 vol% trimesoyl chloride solution for about 10 seconds and removed. The resulting assembly was then dried in an oven (DX400, Yamato Scientific) at 120 °C for 3 minutes. This process resulted in a membrane with a salt rejection layer.

**Table 3: Membrane Embodiments without a SiO₂ Nanoparticle Layer with a Salt Rejection Layer.**

| **Embodiment** | **Cross-linker** | **Mass of Cross-linker to GO** | **Substrate Material** | **Additives** | **Application Method/ Pre-treatment** | **Coating Thickness (nm or lyr)** | **Curing** | | |
|---|---|---|---|---|---|---|---|---|---|
| | | | | | | | **Temp (°C)** | **Time (min)** | |
| **MD-3.1.31.1.1** | CLC-3.1* | 3:1 | Nylon 0.1 µm Pore | N/A | Filtration/ PT:Dopamine | 20 | 80 | 30 | |
| **MD-3.1.31.1.2** | CLC-3.1* | 7:1 | Nylon 0.1 µm Pore | N/A | Filtration/ PT:Dopamine | 20 | 80 | 30 | |
| **MD-3.1.32.1.1 (Prop.)** | CLC-3.2* | 3:1 | Nylon 0.1 µm Pore | N/A | Filtration/ PT:Dopamine | 20 | 80 | 30 | |
| **MD-3.1.32.1.2 (Prop.)** | CLC-3.2* | 7:1 | Nylon 0.1 µm Pore | N/A | Filtration/ PT:Dopamine | 20 | 80 | 30 | |
| **MD-3.1.41.1.1** | CLC-4.1 | 3:1 | Nylon 0.1 µm Pore | N/A | Filtration/ PT:Dopamine | 20 | 80 | 30 | |
| **MD-3.1.41.1.2** | CLC-4.1 | 7:1 | Nylon 0.1 µm Pore | N/A | Filtration/ PT:Dopamine | 20 | 80 | 30 | |
| **MD-3.1.51.1.1 (Prop.)** | CLC-5.1* | 3:1 | Nylon 0.1 µm Pore | N/A | Filtration/ PT:Dopamine | 20 | 80 | 30 | |
| **MD-3.1.52.1.1 (Prop.)** | CLC-5.2* | 3:1 | Nylon 0.1 µm Pore | N/A | Filtration/ PT:Dopamine | 20 | 80 | 30 | |
| **MD-3.1.53.1.1 (Prop.)** | CLC-5.3* | 3:1 | Nylon 0.1 µm Pore | N/A | Filtration/ PT:Dopamine | 20 | 80 | 30 | |
| **MD-3.1.54.1.1 (Prop.)** | CLC-5.4 * | 3:1 | Nylon 0.1 µm Pore | N/A | Filtration/ PT:Dopamine | 20 | 80 | 30 | |
| **MD-3.1.61.1.1 (Prop.)** | CLC-6.1 * | 3:1 | Nylon 0.1 µm Pore | N/A | Filtration/ PT:Dopamine | 20 | 80 | 30 | |
| **MD-3.1.63.1.1 (Prop.)** | CLC-6.3* | 3:1 | Nylon 0.1 µm Pore | N/A | Filtration/ PT:Dopamine | 20 | 80 | 30 | |
| **MD-3.1.64.1.1 (Prop.)** | CLC-6.4* | 3:1 | Nylon 0.1 µm Pore | N/A | Filtration/ PT:Dopamine | 20 | 80 | 30 | |
| Notes: | | | | | | | | | |
| [1] Numbering Scheme is the following: MD-J.K.LL.M.N | | | | | | | | | |

| **Temp (°C)** | **Time (min)** | | | | | | | | |
|---|---|---|---|---|---|---|---|---|---|
| | J = 1 - no salt rejection layer/no SiO₂-nanoparticle layer, 2 - no salt rejection layer/with SiO₂-nanoparticle layer, 3 - salt rejection layer/no SiO₂-nanoparticle layer, 4 - salt rejection Layer/SiO₂-nanoparticle layer; | | | | | | | | |
| | K = 1 - mixture filtration method, 2 - mixture film/dip coating method, 3 - layer by layer method; | | | | | | | | |
| | LL = 31 - CLC-3.1, 32 - CLC-3.2, 41 - CLC-4.1, 51 - CLC-5.1, 52 - CLC-5.2, 53 - CLC-5.3, 54 - CLC-5.4, 55 - | | | | | | | | |
| | CLC-5.5, 61 - CLC-6.1, 62 - CLC-6.2, 63 - CLC-6.3, 64 - CLC-6.4; | | | | | | | | |
| | M = 1 - no protective coating, 2 - protective coating; | | | | | | | | |
| | N = device # within category. | | | | | | | | |
| [2] All PP and PVA/PP substrates are approximately 30 µm thick; whereas the nylon substrates can be between 65-125 µm thick. | | | | | | | | | |
| [3] (Prop.) - Indicates a prophetic example. | | | | | | | | | |

| | | | | | | | | | |
|---|---|---|---|---|---|---|---|---|---|
| * Outside the scope of the invention | | | | | | | | | |

**Table 4: Membrane Embodiments with a SiO₂ Nanoparticle Layer and a Salt Rejection Layer.**

| **Embodiment** | **Cross-linker** | **Mass of Crosslinker to GO** | **Substrate Material** | **Mass Ratio of PVAto SiO₂Nanoparti cles** | **Mass % of Aq. Sol. in Prot. Layer** | **Application Method/Pre-treatment** | **Coating Thickness (nm or lyr)** | **Curing** | |
|---|---|---|---|---|---|---|---|---|---|
| | | | | | | | | **Temp (°C)** | **Time (min)** |
| **MD-2.2.11.1.1 (Prop.)** | CLC-1* | 83:16 | PET | 3:1 | - | Film Coating/ PT:PVA | 200 | 90 | 30 |
| **MD-2.1.21.1.1 (Prop.)** | CLC-2.1* | 3:1 | Nylon 0.1 µm Pore | 3:1 | - | Filtration/ PT:Dopamine | 200 | 80 | 30 |
| **MD-2.1.22.1.1 (Prop.)** | CLC-2.2* | 3:1 | Nylon 0.1 µm Pore | 3:1 | - | Filtration/ PT:Dopamine | 200 | 80 | 30 |
| **MD-2.1.31.1.1 (Prop.)** | CLC-3.1* | 3:1 | Nylon 0.1 µm Pore | 3:1 | - | Filtration/ PT:Dopamine | 200 | 80 | 30 |
| **MD-4.1.32.1.1 (Prop.)** | CLC-3.2* | 3:1 | Nylon 0.1 µm Pore | 3:1 | - | Filtration/ PT:Dopamine | 200 | 80 | 30 |
| **MD-4.1.41.1.1** | CLC-4.1 | 3:1 | Nylon 0.1 µm Pore | 3:1 | - | Filtration/ PT:Dopamine | 200 | 80 | 30 |
| **MD-4.1.41.2.1** | CLC-4.1 | 3:1 | Nylon 0.1 µm Pore | 3:1 | 1.5 wt% PVA | Filtration/ PT:Dopamine | 150 | 80 | 30 |
| **MD-4.1.41.2.2** | CLC-4.1 | 3:1 | Nylon 0.1 µm Pore | 3:1 | 2.5 wt% PVA | Filtration/ PT:Dopamine | 250 | 80 | 30 |
| **MD-4.1.41.2.3** | CLC-4.1 | 3:1 | Nylon 0.1 µm Pore | 3:1 | 5 wt% PVA | Filtration/ PT:Dopamine | 150 | 80 | 30 |
| **MD-4.1.41.2.4** | CLC-4.1 | 3:1 | Nylon 0.1 µm Pore | 3:1 | 5 wt% PVA | Filtration/ PT:Dopamine | 200 | 80 | 30 |
| **MD-4.1.41.2.5** | CLC-4.1 | 3:1 | Nylon 0.1 µm Pore | 3:1 | 5 wt% PVA | Filtration/ PT:Dopamine | 250 | 80 | 30 |
| **MD-4.1.51.1.1 (Prop.)** | CLC-5.1* | 3:1 | Nylon 0.1 µm Pore | 3:1 | - | Filtration/ PT:Dopamine | 200 | 80 | 30 |
| **MD-4.1.52.1.1 (Prop.)** | CLC-5.2* | 3:1 | Nylon 0.1 µm Pore | 3:1 | - | Filtration/ PT:Dopamine | 200 | 80 | 30 |
| **MD-4.1.53.1.1 (Prop.)** | CLC-5.3* | 3:1 | Nylon 0.1 µm Pore | 3:1 | - | Filtration/ PT:Dopamine | 200 | 80 | 30 |
| **MD-4.1.54.1.1 (Prop.)** | CLC-5.4* | 3:1 | Nylon 0.1 µm Pore | 3:1 | - | Filtration/ PT:Dopamine | 200 | 80 | 30 |
| **MD-4.1.61.1.1 (Prop.)** | CLC-6.1 * | 3:1 | Nylon 0.1 µm Pore | 3:1 | - | Filtration/ PT:Dopamine | 200 | 80 | 30 |
| **MD-4.1.63.1.1 (Prop.)** | CLC-6.3* | 3:1 | Nylon 0.1 µm Pore | 3:1 | - | Filtration/ PT:Dopamine | 200 | 80 | 30 |
| **MD-4.1.64.1.1 (Prop.)** | CLC-6.4* | 3:1 | Nylon 0.1 µm Pore | 3:1 | - | Filtration/ PT:Dopamine | 200 | 80 | 30 |
| Notes: | | | | | | | | | |
| [1] Numbering Scheme is the following: MD-J.K.LL.M.N | | | | | | | | | |
| | J = 1 - no salt rejection layer/no SiO₂-nanoparticle layer, 2 - no salt rejection layer/with SiO₂-nanoparticle layer, 3 - salt | | | | | | | | |
| | rejection layer/no SiO₂-nanoparticle layer, 4 - salt rejection Layer/SiO₂-nanoparticle layer; | | | | | | | | |
| | K = 1 - mixture filtration method, 2 - mixture film/dip coating method, 3 - layer by layer method; | | | | | | | | |
| | LL = 11 - CLC-1 (PVA), 21 - CLC-2.1, 22 - CLC-2.2, 31 - CLC-3.1, 32 - CLC-3.2, 41 - CLC-4.1, 51 - CLC-5.1, 52 - CLC-5.2, 53 - CLC-5.3, 54 - CLC-5.4, 55 - CLC-5.5, 61 - CLC-6.1, 62 - CLC-6.2, 63 - CLC-6.3, 64 - CLC-6.4; | | | | | | | | |
| | M = 1 - no protective coating, 2 - protective coating; | | | | | | | | |
| | N = device # within category; | | | | | | | | |
| [2] All PP and PVA/PP substrates are approximately 30 µm thick; whereas the nylon substrates can be between 65-125 µm thick. | | | | | | | | | |
| [3] (Prop.) - Indicates a prophetic example. | | | | | | | | | |

| | | | | | | | | | |
|---|---|---|---|---|---|---|---|---|---|
| * Outside the scope of the invention | | | | | | | | | |

### Example 2.2.2: Preparation of a Membrane with a Protective Coating

Selected membranes were coated with a protective layer as shown in Table 4. For **MD-4.1.41.2.1,** a PVA solution of 1.5 wt% was prepared by stirring 15 g of PVA (Aldrich) in 1 L of DI water at 90 °C for 20 minutes until all granules dissolved. The solution was then cooled to room temperature. The substrate was immersed in the solution for 10 minutes and then removed. Excess solution remaining on the membrane was removed by paper wipes. The resulting assembly was dried in an oven (DX400, Yamato Scientific) at 90 °C for 30 minutes. Thus, a membrane with a protective coating can be obtained. Other selected membranes in Table 4 were coated similarly by using different concentrations of PVA.

### Comparative Example 2.1.1: Preparation of Comparative Membranes (CMDs)

Comparative membranes (CMDs), such as CMD-1.1 and CMD-1.2 as shown in Table 5 were prepared using stock substrate components of polysulfone membrane (PSF) (Sterlitech Corporation, Kent, WA, USA) and polypropolyene (PP) filtration membrane (Celgard LLC, Charlotte, North Carolina, USA) respectively. For CMD-1.3, a PVA/PP membrane was prepared by immersing a PP filtration membrane in a PVA/water solution (Aldrich) for 10 minutes and then drying the membrane in an oven (DX400, Yamato Scientific) at 90 °C for about 30 minutes.

Comparative membranes CMD-2.1.1 through CMD-2.2.2 as shown in Table 5 were also made using methods similar to Examples 2.1.1 through Example 2.2.1 for membranes described above without a SiO₂ nanoparticle layer with the differences outlined in Table 5.

**Table 5: Comparative Membranes.**

| **Membrane** | **Method** | **Crosslinker** | **Mass of Crosslinker to GO** | **Substrate Material** | **Coating Thickness (nm or lyr)** |
|---|---|---|---|---|---|
| **CMD-1.1** | n/a | - | - | PSF | - |
| **CMD-1.2** | n/a | - | - | Stretched PP | - |
| **CMD-1.3** | n/a | - | - | Stretched PP/PVA | n/a |
| **CMD-2.1.1** | Filtration | EDA | 1:1 | Nylon 0.1 µm Pore | 20 |
| **CMD-2.1.2** | Filtration | EDA | 3:1 | Nylon 0.1 µm Pore | 20 |
| **CMD-2.1.3** | Filtration | EDA | 7:1 | Nylon 0.1 µm Pore | 20 |
| **CMD-2.2.1** | Filtration | PPD | 3:1 | Nylon 0.1 µm Pore | 20 |
| **CMD-2.2.2** | Filtration | PPD | 7:1 | Nylon 0.1 µm Pore | 20 |
| Notes: | | | | | |
| [1] All PP and PVA/PP substrates are approximately 30 µm thick; whereas the nylon substrates are 65-125 µm thick. | | | | | |
| [2] All comparative examples have GO and a comparative crosslinker (e.g. ethylenediamine [EDA] or para-phenylenediamine [PPD]), wherein the composites were cured in an oven (DX400, Yamato Scientific) at 80 °C for 30 minutes to facilitate further crosslinking. | | | | | |

### Example 3.1: Membrane Characterization

**XPS Analysis:** Membranes MD-1.1.31.1.1 and MD-1.1.41.1.1 were analyzed by X-ray photoelectron spectroscopy (XPS) to determine the relative distribution of the atomic contents (%). The procedures for XPS are similar to those known in the art. The XPS analysis, shown in Table 6, indicates an increase of nitrogen atom in the GO-MPD membrane as compared to GO (a reference sample), due to the cross-linking of amino groups in the cross-linker of MPD in the GO-MPD membrane.

**Table 6: Analysis Result of GO and GO-Crosslinked Membranes.**

| **Samples** | **Na** | **C** | **N** | **O** | **S** | **Cl** |
|---|---|---|---|---|---|---|
| GO (Ref.) | - | 65.2 | - | 34.0 | 0.8 | - |
| GO-CLC-3.1 | - | 68.8 | 1.1 | 29.9 | 0.2 | - |
| GO-CLC 4.1 | 0.5 | 68.4 | 1.0 | 29.8 | 0.3 | - |

### Example 4.1: Performance Testing of Selected Membranes

**Mechanical Strength Testing:** The water flux of GO-based membrane coated on various porous substrates is expected to be very high, or at least comparable with porous polysulfone substrate widely used in current reverse osmosis membranes.

To test the mechanical strength, the membranes can be tested by placing them into a laboratory apparatus similar to the one shown in FIG. 10. Once secured in the test apparatus, the membrane can be exposed to the unprocessed fluid at a gauge pressure of 50 psi. The water flux through the membrane can be recorded at different time intervals. For example, the water flux can be recorded at 15 minutes, 60 minutes, 120 minutes, and 180 minutes, and etc. when possible.

From the data collected, it was found that the GO-PVA-based membrane can withstand reverse osmosis pressures while providing sufficient flux.

**Dehydration Characteristics** - **Water Vapor Permeability Testing:** The water vapor permeability of the membranes was tested. For the gas leakage, Nitrogen was chosen to mimic air.

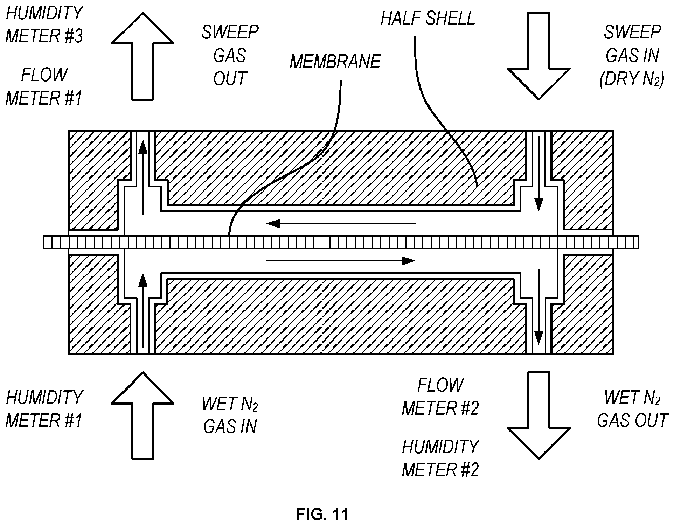

A sample cross-sectional diagram of the test setup is shown in FIG. 11. The test setup comprises a cross-flow test cell (CF016A, Sterlitech) which forms two plenums on either side of the membrane when a membrane is added, each with its own inlet and an outlet. The membrane was placed in the 45 mm by 45 mm test chamber by sandwiching it between the two halves of the test cell to create two sealed plenums when the shells were mated, with each plenum in fluid communication only through the membrane. Then the inlets and outlets were chosen such that the fluid flow in each plenum was in a counter-flow configuration. Into the first side of the membrane, the wet side, wet N₂ gas was sent into the setup and then exited with some water vapor permeating the membrane sample. Into the second side, the dry side, sweep or dry N₂ gas was sent into the setup and then vented, with the wet gas being entrained from the membrane. Humidity and Temperature were measured at three positions: input and output on the wet N₂ gas side, and output on the dry N₂ gas side using a Humidity/Temperature Transmitters (RHXL3SD, Omega Engineering, Inc., Stamford, CT, USA). The flow rates were also measured for both wet and dry sides by two Air Flow Sensors (FLR1204-D, Omega). In addition, the gas pressures were measured on both the wet and dry sides by two Digital Pressure Gauges (Media Gauge MGA-30-A-9V-R, SSI Technologies, Inc., Janesville, WI, USA).

For the measurements, selected membranes were placed in the setup and the wet side inlet was set to a relative humidity of between about 80% to about 90%. The dry side inlet had a relative humidity of 0% initially. The upstream pressure for the wet gas stream was set to 0.13 psi. The upstream pressure for the dry gas stream was set to 0.03 psi. From the instruments, the water vapor pressure and absolute humidity at the three measurement stations (input and output on the wet N₂ gas side, and output on the dry N₂ gas side) was calculated based on the measured temperature and humidity. Then the water vapor transmission rate was calculated from the absolute humidity difference, flow rate, and exposed area of the membrane. Lastly, the water vapor permeability was calculated from the water vapor transmission rate and the water vapor pressure difference between the two plenums. The nitrogen flow rate was derived from the dry N₂ output and the wet N₂ inputs as well as the water vapor transmission rate.

**Dehydration Characteristics** - **Nitrogen Leakage Testing:** The gas leakage of the membranes was tested. For the gas leakage, Nitrogen was chosen to mimic air. For these tests, the same test setup was used as that in the Water Vapor Permeability testing described above with the exception that the dry N₂ gas inlet was closed and the dry N₂ outlet was vented to, instead of atmosphere, a flow measurement instrument (D800286 Gilibrator-2 Standard Air Flow Calibrator; Sensidyne, St. Petersburg, FL, USA) with a normal test cell (20 cc to 6 LPM, Sensidyne) or a low-flow test cell (1 cc/min to 250 cc/min, Sensidyne) to measure the flow leakage through the membrane. For N₂ flow rates at about 1 cc/min or below, a 0.5 mL manual bubble flow meter was used (#23771, Aldrich), which has a range of about 0.03 cc/min to about 5 cc/min, to determine the leakage rate.

For the measurements, the selected membranes were placed in the setup and the wet side inlet was set to a relative humidity of between about 80% to about 90%. The dry side inlet was closed so that only gas leaked through the membrane would go to the flow measurement instrument. The upstream pressure for the wet gas stream was set to 0.13 psi and the leakage of the N₂ through the membrane was measured.

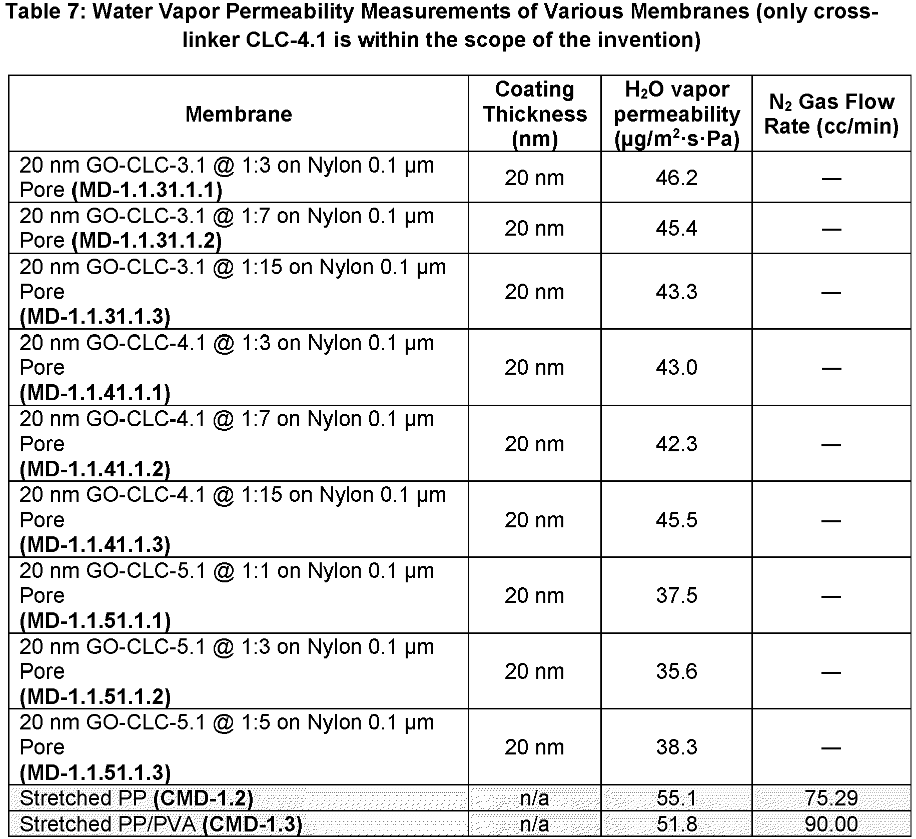

**Water Flux and Salt Rejection Testing:** The water flux of GO-based membrane coated on a porous substrate was observed to be very high, which is comparable with porous polysulfone substrate widely use in current reverse osmosis membranes.

To test the salt rejection capability, the reverse osmosis membranes were tested in a test cell similar to that shown in FIG. 10. To test the membranes' ability to reject salt and retain adequate water flux, the membranes were exposed to a 1500 ppm NaCl solution at 225 psi. After approximately 120 minutes when the membrane reached steady state, the salt rejection and the water flux was recorded. As shown in Table 8, the membranes with 20 nm coating thickness demonstrated high NaCl salt rejection and good water flux as compared to their comparative membranes **(CMD-2.2.1, CMD-2.1.3** and **CMD-2.2.2)** respectively. However, the membranes with coating thickness of 150 nm or above have low salt rejection although most of them maintain good water flux with some having higher water flux such as **MD-4.1.41.1.1** and **MD-4.1.41.2.1.**

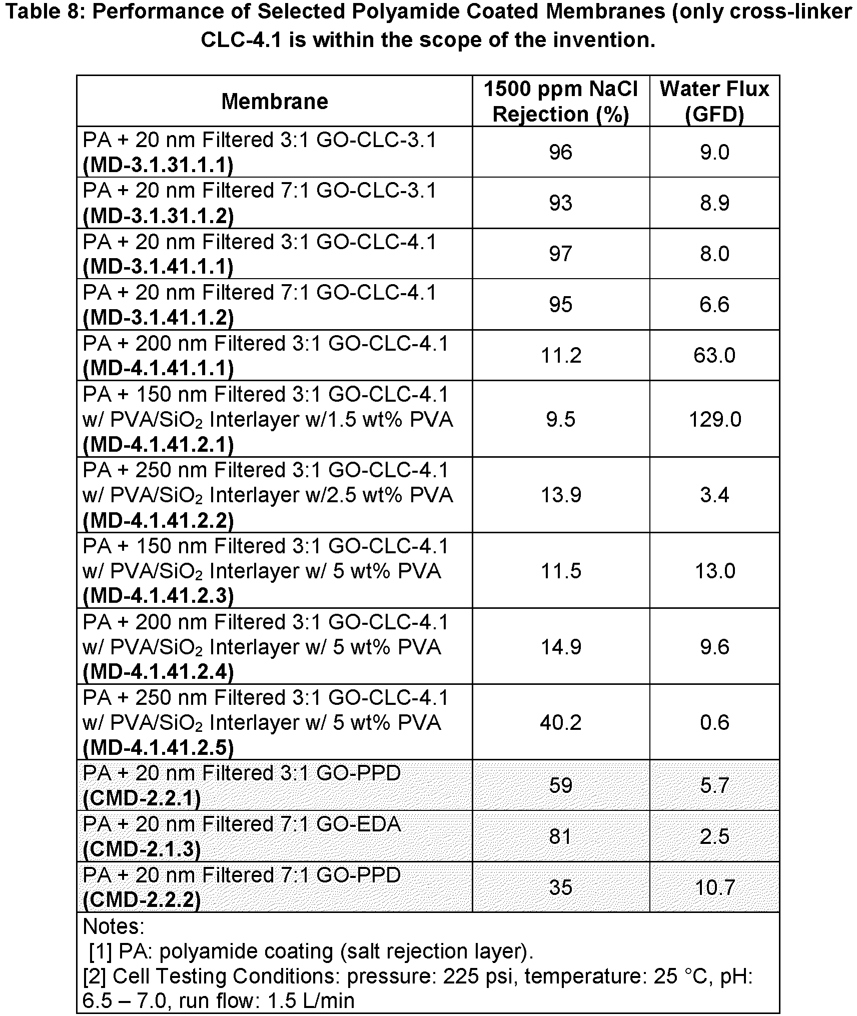

## Claims

1. A water permeable membrane comprising:
a porous support; and
a composite, which is in fluid communication with the support, comprising a crosslinked graphene oxide (GO) composite layer;
wherein the GO composite layer is crosslinked by a crosslinker comprising a compound of Formula 2: 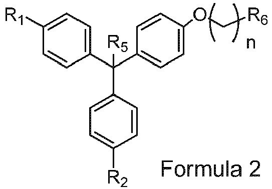 or a salt thereof; wherein; R₁ and R₂ are independently NH₂ or OH; R₅ is H, CH₃, or C₂H₅; R₆ is H, CO₂H, or SO₃H; and n is 0, 1, 2, 3, 4, 5, 6, 7, 8, 9, or 10;
wherein the porous support is pretreated with dopamine, and
wherein the coating thickness of the composite on the substrate is 10 nm to 50 nm.

2. The membrane of claim 1, wherein the crosslinker comprises:

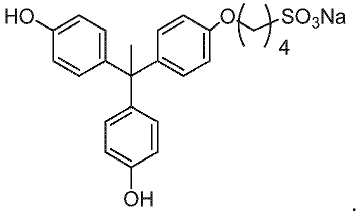

3. The membrane of claim 1 wherein the support is a non-woven fabric.

4. The membrane of claim 3, wherein the support comprises polyamide, polyimide, polyvinylidene fluoride, polyethylene, polyethylene terephthalate, polysulfone, or polyether sulfone.

5. The membrane of claim 1, further comprising a salt rejection layer, wherein the salt rejection layer is disposed on the top of the composite, and wherein the salt rejection layer comprises a polyamide prepared by reacting meta-phenylenediamine and trimesoyl chloride.

6. The membrane of claim 1, 2, 3, 4, or 5, wherein the coating thickness is 20 nm.

7. A method of making the water permeable membrane of claim 1, comprising: (1) pretreating a substrate with dopamine; (2) resting a coating mixture of a single mixed aqueous solution of a graphene oxide and a cross-linker for 30 min to 12 hours to create a coating mixture, (3) applying the coating mixture to a substrate; (4) repeating step 3 as necessary to achieve the desired thickness or number of layers; and (5) curing the resulting coated substrate at 50 °C to 120 °C for 15 minutes to 2 hours.

## Patentansprüche

1. Wasserdurchlässige Membran, umfassend:
einen porösen Träger; und
einen Verbundstoff, der in Fluidverbindung mit dem Träger steht, umfassend eine Verbundschicht aus vernetztem Graphenoxid (GO);
wobei die GO-Verbundschicht durch einen Vernetzer vernetzt ist, umfassend eine Verbindung der Formel 2: 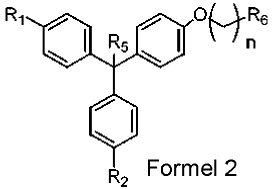
oder ein Salz davon; wobei; R₁ und F₂ unabhängig NH₂ oder OH sind; R₅ H, CH₃ oder C₂H₅ ist; R₆ H, CO₂H oder SO₃H ist; und n 0, 1, 2, 3, 4, 5, 6, 7, 8, 9 oder 10 ist;
wobei der poröse Träger mit Dopamin vorbehandelt ist, und
wobei die Beschichtungsdicke des Verbundstoffs auf dem Substrat 10 nm bis 50 nm beträgt.

2. Membran nach Anspruch 1, wobei der Vernetzer umfasst:

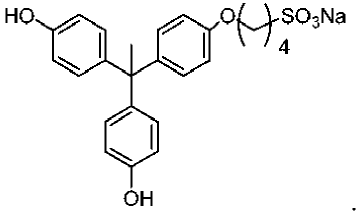

3. Membran nach Anspruch 1, wobei der Träger ein Vliesstoff ist.

4. Membran nach Anspruch 3, wobei der Träger Polyamid, Polyimid, Polyvinylidenfluorid, Polyethylen, Polyethylenterephthalat, Polysulfon oder Polyethersulfon umfasst.

5. Membran nach Anspruch 1, ferner umfassend eine Salzabweisungsschicht, wobei die Salzabweisungsschicht auf der Oberseite des Verbundstoffs angeordnet ist und wobei die Salzabweisungsschicht ein Polyamid umfasst, das durch ein Umsetzen von meta-Phenylendiamin und Trimesoylchlorid hergestellt wird.

6. Membran nach Anspruch 1, 2, 3, 4 oder 5, wobei die Beschichtungsdicke 20 nm beträgt.

7. Verfahren zum Fertigen der wasserdurchlässigen Membran nach Anspruch 1, umfassend: (1) Vorbehandeln eines Substrats mit Dopamin; (2) Ruhen lassen einer Beschichtungsmischung aus einer einzigen gemischten wässrigen Lösung eines Graphenoxids und eines Vernetzers für 30 Minuten bis 12 Stunden, um eine Beschichtungsmischung zu erzeugen, (3) Aufbringen der Beschichtungsmischung auf ein Substrat; (4) Wiederholen von Schritt 3 nach Bedarf, um die gewünschte Dicke oder Anzahl von Schichten zu erreichen; und (5) Härten des resultierenden beschichteten Substrats bei 50 °C bis 120 °C für 15 Minuten bis 2 Stunden.

## Revendications

1. Membrane perméable à l'eau comprenant :
un support poreux ; et
un composite, qui est en communication fluidique avec le support, comprenant une couche composite d'oxyde de graphène (GO) réticulé ;
dans laquelle la couche composite GO est réticulée par un agent de réticulation comprenant un composé de formule 2 : 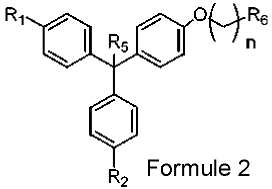
ou un sel de celui-ci ; où R₁ et F₂ sont indépendamment NH₂ ou OH ; R₅ est H, CH₃ ou C₂H₅; R₆ est H, CO₂H ou SO₃H ; et n vaut 0, 1, 2, 3, 4, 5, 6, 7, 8, 9 ou 10 ;
dans laquelle le support poreux est prétraité à la dopamine, et
dans laquelle l'épaisseur de revêtement du composite sur le substrat est de 10 nm à 50 nm.

2. Membrane selon la revendication 1, dans laquelle l'agent de réticulation comprend :

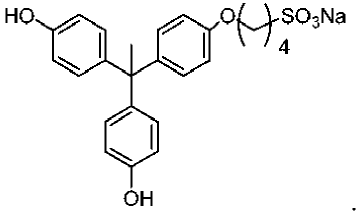

3. Membrane selon la revendication 1, dans laquelle le support est un tissu non tissé.

4. Membrane selon la revendication 3, dans laquelle le support comprend du polyamide, du polyimide, du fluorure de polyvinylidène, du polyéthylène, du polyéthylène téréphtalate, du polysulfone ou du polyéther sulfone.

5. Membrane selon la revendication 1, comprenant en outre une couche de rejet de sel, dans laquelle la couche de rejet de sel est disposée au-dessus du composite, et dans laquelle la couche de rejet de sel comprend un polyamide préparé en faisant réagir de la méta-phénylènediamine et du chlorure de trimésoyle.

6. Membrane selon la revendication 1, 2, 3, 4 ou 5, dans laquelle l'épaisseur du revêtement est de 20 nm.

7. Procédé de fabrication de la membrane perméable à l'eau selon la revendication 1, comprenant : (1) le prétraitement d'un substrat à la dopamine ; (2) le repos d'un mélange de revêtement d'une seule solution aqueuse mixte d'oxyde de graphène et d'un agent de réticulation pendant 30 min à 12 heures pour créer un mélange de revêtement, (3) l'application du mélange de revêtement sur un substrat ; (4) la répétition de l'étape 3 si nécessaire pour obtenir l'épaisseur ou le nombre de couches souhaité(e) ; et (5) durcissement du substrat revêtu résultant à une température de 50 °C à 120 °C pendant 15 minutes à 2 heures.
